# EUROPÄISCHE PATENTANMELDUNG

(11) **EP 2 468 686 A1**
(43) Veröffentlichungstag der Anmeldung: **27.06.2012**
(21) Anmeldenummer: 10015854.2
(22) Anmeldetag: 21.12.2010
(51) Int. Cl.: C02F 3/04, C02F 3/10, C02F 3/30, C02F 101/10, C02F 101/16

(54) **Integriete Abwasseraufbereitungsanlage**

(71) Anmelder: Kolesnikov, Vladimir Petrovich, Rostov-na-Donu 344006 (RU); Kolesnikov, Dmitry Vladimirovich, Rostov-na-Donu 344006 (RU)
(72) Erfinder: Kolesnikov, Vladimir Petrovich, Rostov-na-Donu 344006 (RU); Kolesnikov, Dmitry Vladimirovich, Rostov-na-Donu 344006 (RU)
(74) Vertreter: Jeck, Anton

(57) **Zusammenfassung**

Die Erfindung betrifft die Reinigung von Haushalts- und Industrieabwasser mit einem Gehalt an organischen Verunreinigungen im BSD von 50 - 50000 mg/dm³, an Schwebstoffen von 50 - 1500 mg/dm³, Fetten bis zu 300 mg/dm³ sowie Schwefelwasserstoff, Hydrosulfiden und Ammoniakstickstoff bis zu 100 mg/dm³ und kann für die Aufbereitung von Abwasser verwendet werden, das in Wohnorten, Dörfern, Städten, Geschäftsvierteln, Fleischabpackanlagen, Fischverarbeitungsanlagen, Viehzuchtbetrieben, Hefefabriken, Brauereien, Zuckerfabriken, Schlempen- und Papierfabriken sowie chemischen und mikrobiologischen Unternehmen usw. anfällt.

Die von den Entwicklern betrachtete Aufgabe war, eine neue integrierte biochemische Abwasseraufbereitungsanlage mit solchen Varianten zu schaffen, die eine wirksame und stetige Reinigungsqualität der Abwasserreinlgung vorsehen, wobei das Abwasser durch hohe Gehalte an organischen Verunreinigungen, an Schwefelwasserstoff, Hydrosulfiden und an Ammoniakstickstoff gekennzeichnet ist und wobei die Umgebungssichefieit des gereinigten Abwassers erhöht werden sollte.

Das durch die Entwickler bei der Lösung des Problems erreichte technische Ergebnis war ein hoher Pegel der Abwasserreinigung und der Reinigung der verwendeten Luft und eine wertvolle Produktion von körnigen Düngemitteln.

Das Kennzeichen der Erfindung besteht darin, dass bei einer kombinierten biologischen Aufbereitungsvorrichtung mit mechanischen Aufbereitungsvorrichtungen, einer Abwasser- und Schlempenmischkammer mit einer Umlaufpumpe und einer kombinierten biologischen Aufbereitungsvorrichtung, die ein Biofilter mit ebenem Futter, eine Spritzleitung, Sammeltabletts und Ableitungskollektoren aufweist, die an Wasserstrahl-Belüftungssäulen angeschlossen sind, die in Belüftungszonen eingetaucht sind, und mit Nachaufbereitungsvorrichtungen die kombinierte biologische Aufbereitungsvorrichtung, deren Kapazität 5 - 15000 m³/Tag beträgt, die Spritzleitung des Biofifters Tabletts mit Entleerungspassstücken und Reflexionsscheiben aufweist,
dass der Abstand von den oberen Enden der Entleerungspassstücke der Tabletts von den Reflexionsscheiben 0,8 - 2 m beträgt,
dass der Abstand zwischen den Mittelpunkten der Tabletts und der Abstand zwischen den Achsen der Tablettpassstücke 0,6 -1,8 m beträgt,
dass der Durchmesser der Belüftungssäulen 25 - 100 mm beträgt,
dass die Höhe der Belüftungssäulen über dem Bewässerungspegel in Belüftungsabsetztanks 1,2 - 3,5 m beträgt,
dass die Eintauchtiefe unter dem Flüssigkeitspegel 1,5 - 4 m beträgt,
dass der Abstand zwischen den oberen Belüftungssäulenschnitten 50 - 500 mm beträgt und
dass der Abstand zwischen den unteren Belüftungssäulenschnitten 0,5 - 3 m beträgt.

## Beschreibung

Die Erfindung betrifft die Aufbereitung von Haushalts- und Industrieabwässern mit einem Gehalt an organischen Verunreinigungen im BSD in der Größe von 50 - 50000 mg/dm³, an Schwebstoffen in der Größe von 50 - 1500 mg/dm³ und an Fetten in der Größe bis zu 300 mg/dm³. Diese Aufbereitung kann für die Reinigung von Abwasser verwendet werden, das in Wohngebäuden, Dörfern, Geschäftsvierteln und Städten, Fleischabpackanlagen, Fischbearbeitungsanlagen, Viehzuchtbetrieben, Hefefabriken, Brauereien, Zuckerfabriken, Schlempen- und Papierfabriken sowie chemischen und mikrobiologischen Unternehmen usw. anfällt. Die Erfindung ist auch für eine Reinigung von Abwasser geeignet, das einen hohen Gehalt an Hydrosulfiden und Schwefelwasserstoff (5 - 100 mg/dm³) und Ammoniakstickstoff (5-100 mg/dm³) aufgrund der Zersetzung von organischen Verunreinigungen in den Kollektoren und Aufnehmern von Transferpumpstationen, bei der Aufnahme in Detritus-Absetzbecken und Abwasser-Senkgruben und auch bei der Methanfermentation in anaeroben Zellstoffkochern aufweist.

### Stand der Technik

Bekannt ist eine aktive Klärschlamm-Aufbereitungsanlage, die einen Biofilter, der Ober einer Lufttank-Trennvorrichtung mit Zuführohren für eine Flüssigkeitsstrahl-Belüftung angeordnet ist, die an einer Biofilter-Sammelplatte befestigt sind, ferner eine Mischkammer und eine Umlaufpumpe aufweist (s. Verfasserurkunde Nr. 1020379, MKI SO2 F3/02, veröffentlicht 30.5.1983). Diese Anlage arbeitet folgendermaßen: Das Abwasser wird nach einer Vorbehandlung (Beseitigung von schwebenden Schadstoffen) der Mischkammer zusammen mit einer Schlempenmischung zugeführt, die mittels eines hydrostatischen Kopfs aus der Lufttank-Trennvorrichtung angetrieben wird. Danach wird die Abwasser- und Schlempenmischung mit der Pumpe über den Biofilter, die Zuführrohre (aerobe Säulen) und die Lufttank-Trennvorrichtung in Umlauf gebracht. Die Verunreinigungen werden durch Biozönose biologisch oxidiert, die mittels eines Biofilter-Futters und aktiven Schlempenmikroorganismen in der Lufttank-Trennvorrichtung erfolgt. Die Schlempenmischung wird nach einer Bewässerung und Durchführung durch das Biofilter mit Luftsauerstoff gesättigt. Eine zusätzliche Sättigung der Flüssigkeit mit Sauerstoff im Lufttank und eine Vermischung des Lufttankinhalts erfolgt durch die Luftdurchleitung in den Zuführrohren (aerobe Säulen), durch die Bewegung des Gas-Flüssigkeits-Flusses und durch den Luftblasenfluss.

Die Vorteile dieser bekannten Anlage bestehen darin, dass ein hoher Abwasserreinigungspegel aufgrund der Kombination der Oxidations- und besseren Merkmale der Biofilter-Biozönose und der Mikroflora der aktiven Schlempe im Lufttank erreicht wird, ferner als Basisvorrichtung eine einfache Niederdruckpumpe verwendet werden kann und ein niedriger Energieverbrauch erzielt wird (bis zu 0,5 kW je kg entfernter BSD). Die Biofilter blasen den Schwefelwasserstoff fort und absorbieren die Hydrosulfide mit der angefügten Schlempe, wodurch eine wirksame Reinigung des mit einem hohen Gehalt an den genannten Schadstoffen behafteten Abwassers gefördert wird. Gleichzeitig ist die Verwendung einer einzelnen kombinierten Anlage als Einheit für die Abwasseraufbereitung innerhalb eines Kapazitätsbereichs von 100 - 50000 m³/Tag unsinnig, weil die Steuerung der hydrodynamischen Betriebsweise der Anlage komplizierter wird und eine Anlagenstilllegung für die Reparatur von einigen Elementen unmöglich ist.

Das Eigengewicht der Biofilter bei der generellen Reinigungswirkung der kombinierten Anlage kann erhöht sein und ebenso der Energieverbrauch, der im Schnitt bei einem Konstruktionsentwurf des Biofilters anfällt, der mit kugelförmigen Keramikelementen versehen ist, die Oberflächenaussparungen aufweisen, und der für Transfergeräte für chemische Massen entwickelt wurde (RF 2310499, KI. B01D, 53/18, veröffentlicht 20.11.2007).

Ferner ist durch die RF 2139257, MKI SO2 F3/02, veröff. 10.10.1999, eine starke biochemische Abwasseraufbereitungsanlage bekannt, deren Lufttank und Bioreaktor mit biologischen Einspeiseblöcken aus Bahnen ausgerüstet sind, die mit Vertiefungen und Borsten versehen sind und die eine Erhöhung des Gesamtbetrags der aktiven Biomasse einschließlich der Nitrifizierung erlaubt.

Eine der vorliegenden Erfindung sehr ähnliche und nahe kommende biochemische Abwasseraufbereitungsanlage (Prototyp) ist in der RF 2220915, MKI SO2 F3/02, veröff. 10.01.2004, beschrieben. Die Bewässerungsregelmäßigkeit durch das Biofilter der kombinierten Anlage hängt nicht nur von den Sperrventilen, über die die Abwasser- und Schlempenmischung zu den Tabletts geführt werden, sondern auch von der Verfügbarkeit von Druckminderungsvorrichtungen ab, wenn die Flüssigkeit den Tabletts zugeführt wird, weil sich die Flüssigkeitswelle in den Anfangsabschnitten abrupt bewegt. Die Bewässerungsregelmäßigkeit des Biofilterfutters bei einem Minimum an Energieverbrauch zum Antrieb der Flüssigkeit in das Bewässerungssystem hängt sowohl von der Höhe der oberen Schnitte an den hängt sowohl von der Höhe der oberen Schnitte an den Entleerungspassstüdcen zu den Reflexionsscheiben (1 - 1,5 m) als auch von den Abständen zwischen den Tabletts und den Abständen zwischen den Entleerungspassstücken ab. Die in diesem Patent genannten Abmessungen der Entleerungspassstücke (Durchmesser 4 - 10 m) sehen eine Dichte der fallenden Flüssigkeitsstrahlen und eine Verschiedenheit der Reflexionswege der Flüssigkeitstropfen vor. Weil eine Schicht der zugefügten Mikroflora auf der Innenfläche der Passstücke (β = 1,5 mm) vorhanden ist, wobei der Durchmesser der Passstücke 20 - 35 mm beträgt und deren Länge 6 Durchmesser überschreitet, und auch wegen der Greiferzähne, nimmt gleichzeitig die Abgabekapazität der Passstücke ab, und deren Behinderungswahrscheinlichkeit nimmt zu, so dass eine häufige Reinigung nötig Ist.

Die Wirksamkeit der Oxidierung der organischen Verunreinigungen in den Filtern der kombinierten Anlage hängt von den Futterarten ab. Ein flaches Futter findet auf Blöcken gerillter Tafeln verschiedener Rauheit Anwendung, wodurch das Wachstum der Biomasse im oberen Futterabschnitt erleichtert und die Schlammbildung im mittleren und unteren Abschnitt ausgeschlossen wird.

Die Verwendung von künstlichen dielektrischen Materialien, wie Glasfaserstoff, Keramikkunststoff oder anderen Kunststoffen, genügt nicht, um eine genügende Kopplung zwischen der Mikroflora und der Futterfläche vorzusehen. Die Herstellungsprüfungen haben gezeigt, dass die beste Kopplung zwischen der Biomasse und der Futterfläche mit Keramik erreicht wird.

Die Wasserstrahleinheit der kombinierten Anlage sorgt für eine wirksame Sättigung der Flüssigkeit mit Sauerstoff und für ein Umrühren der Lufttankinhalte nur im Fall von bestimmten Durchmessern der aeroben Säulen und bestimmten Verhältnissen zwischen der Säulenhöhe über der Oberfläche und der Höhe der eingetauchten Abschnitte der Säulen. Eine richtige Parameterwahl vermindert den Energieverbrauch für die Abwasseraufbereitung. Die Wirksamkeit der Luftzufuhr in den Säulen wird durch Bedingungen, unter denen die Abwasser- und Schlempenmischung zu den Abwasserkollektoren gelangt, durch die horizontalen Abstände zwischen den oberen Abschnitten der Luftsäulen und durch die Genauigkeit der Befestigung der oberen Abschnitte der Luftsäulen in Bezug auf den Wasserpegel beeinflusst. Die helixförmigen Greifzähne in den oberen Säulenabschnitten vergrößern die Verstopfungsfähigkeit der Säulen im Fall von langfaserigen Verunreinigungen. Der Prototyp der biochemischen Abwasseraufbereitungsanlage setzt voraus, dass zum Umrühren der Lufttankinhalte die unteren Rohrenden gleichmäßig über dem flachen Abschnitt des Lufttankbodens mit einem Abstand von 0,2 - 0,3 m angeordnet werden.

Die Verhinderung der Schlammabsetzung und -zersetzung mit einem Minimalaufwand an Energieverbrauch für den Schlammmischungsumlauf, der die aktive Biomasse der aeroben Zone im Schwebezustand hält, hängt gleichzeitig sowohl vom Durchmesser der aeroben Säulen, der eingeströmten Ladung (m³/h), den Proportionen der Höhen der aeroben Säulen über und unter dem Flüssigkeitspegel als auch von den Abständen zwischen dem oberen und dem unteren Säulenabschnitt, von den Abständen zwischen den Säulenenden und dem Kopplungswinkel zwischen dem flachen Abschnitt, dem konischen Abschnitt des Bodens und der ebenen Schlammableitung ab.

Die Abwasserabsetzstoffe enthalten optimalerweise Kohlenstoff, Stickstoff, Phosphor und Spurenelemente, Jede Möglichkeit zur Verwendung von Absetzstoffen als Düngemittel ist aber aufgrund der lebenswichtigen Kapazität der Eingeweideflora und der Geruchsnuancen beschränkt, wenn diese Absetzstoffe in das Erdreich gelangen. Die Verwendung von Mikrowellengeräten verhindert die Absetzung von Abwasserabsetzstoffen völlig und vermindert die Eingeweideflora. Der aus der kombinierten Anlage entfernte Überschussschlamm ist durch ein optimales Verhältnis der biogenetischen Elemente der Anlage, durch die Reinwasser-Abgabekapazität und eine hohe Mineralisierung gekennzeichnet. Das Fehlen von Primärabsetzstoffen innerhalb der Flussschemata der kombinierten Aufbereitungsanlage, der aeroben Tanks und der Sekundärabsetzstoffblöcke schließen eine Absetzstoffablagerung, Zersetzung und entsprechend alle Geruchsnuancen im Gegensatz zu üblichen Anlagen aus, deren Absetzstoffe faulende Fermente zurückbehalten. Deshalb kann der Überschussschlamm als Düngemittel verwendet werden.

Die Haupteinflüsse auf die biologische Abwasseraufbereitung sind die Anfangstemperaturen des Abwassers und der Außenluft. Die Kaltwetter-Durchschnittstemperatur des Abwassers in Städten und Geschäftsvierteln in Russland beträgt 15 - 17° C, während sie in mittelgroßen und kleinen Dörfern 9 - 14° C beträgt. Innerhalb von durchschnittlichen aeroben Tanks fallen, wenn die Lufttemperatur -10 bis -20° C beträgt, die Flüssigkeitstemperaturen während der Aufbereitung um 1 - 3° C, während sie in großen aeroben Tanks um 4 - 9° C fallen, so dass sich eine Verlangsamung oder ein völliger Stillstand der biologischen Aufbereitung ergeben. In heißen Ländern, bei hohen Abwasser- und Lufttemperaturen und auch bei direktem Sonnenlicht steigt die Temperatur der aufbereiteten Flüssigkeit auf bis zu 35° C und mehr an, wodurch andererseits auch die Luftlöslichkeit und die Aufbereitungsgeschwindigkeit beeinflusst werden. Ein geschlossener Entwurf für die Abwasseraufbereitungsanlagen löst teilweise das Problem der Flüssigkeitskühlung oder -erwärmung, doch die Basislinie der Optimierung der Anlagentemperatur und der Verminderung des Energieverbrauchs für die Luftbehandlung besteht in der Erhöhung des Luftsauerstoffverwendungsfaktors.

Wenn das Abwasser in den aeroben Tanks gereinigt wird, tritt eine große Anzahl von Blasen auf, die platzen und damit Tropfen bilden, die in die Atmosphäre gelangen und die zusammen eine pathogene Mikroflora tragen. Auf diese Weise wird die Luft mit infektösen und invasiven Krankheitskeimen verunreinigt. Um diese technische Luft zu desinfizieren und zu desodorieren, müssen die Anlagen mit Luftaufbereitungsvorrichtungen versehen werden. Die drei- oder vierstufigen Luftaufbereitungsvorrichtungen der in den Städten von Monaco, Venedig und Antibes installierten Anlagen verwenden nasse Hypochlorite, eine Behandlung mit ätzender Soda, und alle übel riechenden Gerüche werden mit Ozon entfernt, so dass die Luftreinigung zu teuer wird.

Die Aufgabe der Erfindung besteht darin, eine neue wirksame biochemische Abwasseraufbereitungsanlage zu schaffen, mit der eine stetige Qualität der Abwasseraufbereitung erzielt wird, wobei das Abwasser durch niedrige und hohe organische Verunreinigungskonzentrationen gekennzeichnet ist, einen hohen Gehalt an Schwefelwasserstoff und Hydrogensulfiden sowie Ammoniakstickstoff aufweist und die Umweltsicherheit des gereinigten Abwassers erhöht, bei der insbesondere die Sanitärschutzzone um die Anlage verkleinert werden kann.

Diese Aufgabe wird dadurch gelöst, dass die Leistung der Anlage und die Stabilität des Betriebs bei verschiedenen Verunreinigungskonzentrationen erhöht werden. Die höhere Leistung und die Betriebsstabilität vorbestimmen einen niedrigeren Energieverbrauch für die Abwasseraufbereitung, eine Desinfizierung und eine Desodorierung der verwendeten Luft. Vor allem wird die Anlage in die Lage versetzt, Abfall derart zu verwenden, dass gekörntes Düngemittel erzeugt wird.

### Offenbarung der Erfindung

Die Merkmale der Erfindung sind folgende: Die integrierte biochemische Abwasseraufbereitungsanlage weist mechanische Aufbereitungsvorrichtungen, eine Abwasserschlammmischkammer mit einer Umlaufpumpe, eine kombinierte biologische Aufbereitungsvorrichtung mit einem eine ebene Einspeisung aufweisenden Biofilter, eine Einspritzleitung, Sammeltabletts, Ableitungskollektoren mit aeroben Wasserstrahlsäulen, die in den aeroben Zonen vertieft sind, und Vorbehandlungsvorrichtungen auf. Innerhalb der kombinierten biologischen Aufbereitungsvorrichtung mit einer Kapazität von 5 - 15000 m3/Tag weist die Biofilterspritzleitung Tabletts mit Entleerungspassstücken und Reflexionsscheiben auf, wobei der Abstand der oberen Enden der Entleerungspassstücke der Tabletts von den Reflexionsscheiben 0,8 - 2 m und der Abstand zwischen den Tablettmitten und der Abstand zwischen den Achsen der Entleerungspassstücke der Tabletts 0,6 - 1,8 m beträgt. Der Durchmesser der aeroben Säulen beträgt 25 - 100 mm. Die Höhe der Säulen über dem Flüssigkeitspegel in den aeroben Absetztanks beträgt 1,2 - 3,5 m, und die Vertiefungshöhe unter dem Flüssigkeitspegel beträgt 1,5 - 4 m. Der Abstand zwischen den oberen Säulenbereichen beträgt 50 - 500 mm, und der Abstand zwischen den unteren Säulenbereichen beträgt 0,5 - 3 m.

Weitere Merkmale der Erfindung sind folgende: Die Länge der Entleerungsstutzen, die auf den Tabletts für die Spritzleitungen installiert sind, liegt innerhalb von 2 - 6 Durchmessern. Der Durchmesser der Reflexionsscheiben beträgt 80 - 200 mm. Die Rohre zur Förderung der Abwasser- und Schlempenmischung zu den Biofilterbebelüftungstabletts weisen Verschlüsse auf. Zusätzlich weisen die Tabletteingänge Eingangstore auf, und es gibt Leitplatten vor den Eingängen der Entleerungspassstücke.

Ferner umfasst die Erfindung folgende Merkmale: Die Tabletts für die BiofilterSpritzleitungen sind mit Helium-Neon-Laser ausgerüstet, die das Wachstum der Mikroflora, die Nitrifizierung und die Denitrifizierung stimulieren.

Weitere Merkmale der Erfindung sind: Die Biofilter-Fufterelemente sind Kugeln mit einem Durchmesser von 35 - 100 mm und mit 4 - 10 Vertiefungen, deren Achsen in der Kugelmitte zusammenlaufen. Die Kugeln besitzen Oberflächengreifzähne mit einer Länge von 0,1 - 1,5 m. Im Material der Elemente sind verschiedene Metalle kombiniert.

Weitere Merkmale der Erfindung sind: Das Biofilter-Futter ist aus Wellkeramiktafeln hergestellt mit jeweils einer Breite von 0,5 - 1,5 m, einer Höhe von 0,5 - 3 m, einer Stärke von 2 - 4 mm und mit Oberflächengreifzähnen von 0,1 - 2 mm Länge (Rauheit), ferner mit einem Rahmen aus parallelen und längslaufenden, gewellten Bändern mit einer Breite und Stärke von 3 - 10 mm. Ein Teil der längslaufenden Bänder ist aus 10 - 35 mm breiten durchdringenden Wellenteilstücken gefertigt; Metallkombinationen sind im Material der Tafeln eingeschlossen.

Ferner umfasst die Erfindung folgende Merkmale: Der Ableitungskollektor des Biofiltertabletts ist mit einem Leitreflektor ausgerüstet. Der obere Abschnitt der aeroben Säulen ist mit Passstücken versehen, die in Sockel eingedreht sind, die am Boden des Ableitungskollektors befestigt sind. Der Ableitungskollektor ist mit einem kleinen Zugang versehen, um die Passstücke zu montieren und die Rohre zu reinigen.

Weiterhin weist die Erfindung folgende Merkmale auf: Die Ableitungspassstücke der Biofilterspritzleitungen und die Passstücke der oberen Abschnitte der aeroben Säulen weisen 1 - 1,5 Umdrehungen hohe helixförmige Vertiefungen mit einer Höhe von nicht mehr als 0,7 Durchmesser der Passstücke auf.

Weiterhin weist die Erfindung folgende Merkmale auf: Der Außenumfang des Teilstücks, das den Biofilterraum vom Lufttank-Trennerraum mit einem Abstand von 0,5 - 1,5 m voneinander abtrennt, weist Löcher oder Bypassventile auf.

Weiterhin weist die Erfindung folgende Merkmale auf: Für die Durchmesser von 25 - 100 mm der aeroben Säulen beträgt die Höhe der unteren Bereiche der Säulen über dem Boden der aeroben Zone 0,05 - 0,4 m, während der Abstand vom unteren Abschnitt der äußersten aeroben Säulen bis zur Kopplung zwischen den flachen und konischen Teilen des Lufttank-Trennerbodens 0,5 - 1,2 m beträgt.

Weiterhin weist die Erfindung folgende Merkmale auf: Die Länge des unteren Beins des konischen Teils der Lufttank-Trenner beträgt die halbe Breite der Absetzzone plus 0,1 - 1,0 m. Die Höhe des unteren Abschnitts des konischen Teils des Teilstücks, der die aerobe Zone von der Absetzzone nach unten zum Boden trennt, beträgt 0,5 - 1,5 m. Die Breite von dreieckförmigen Rollen, die im flachen Abschnitt des Bodens der aeroben Zone angeordnet sind, beträgt 0,5 - 2,0 m, während ihre Höhe 0,5 - 1,5 m beträgt. Das Schlempenentladungsrohr ist längs des Außenumfangs des konischen Teils des Lufttank-Trennerbodens befestigt und weist Löcher oder Anschlussstutzen auf, die unter einem Winkel von 0 - 90° zur Rohrlängsachse und mit einem Abstand von 0,2 - 1,0 m voneinander angeordnet sind.

Weiterhin weist die Erfindung folgende Merkmale auf: Über den Rollen gibt es biologische Einspeiseblöcke, die aus Kunststoffplatten mit Vertiefungen, die einen Durchmesser von 3 - 30 mm aufweisen, und mit Borsten, die eine Länge von 5 - 50 mm aufweisen, oder aus Keramikplatten bestehen, die Metallzusammensetzungen mit angefügten Gelenken oder Platten verschiedener Länge (5 - 40 mm) und Greifzähne (0,1 - 1,5 mm) aufweisen, die eine Rauheit schaffen.

Weiterhin weist die Erfindung folgende Merkmale auf: Die Anlage besteht aus 2 - 4 kombinierten biologischen Aufbereitungsvorrichtungen, die an die verbundene Mischkammer über Rohrleitungen angeschlossen sind, die die Schlempe aus den aeroben Absetztanks befördern. Die Hauptrohrleitung der Umlaufpumpe der Mischkammer ist mit den Spritzleitungen der kombinierten biologischen Aufbereitungsbiofilter verbunden.

Weiterhin weist die Erfindung folgende Merkmale auf: Die Anlage zur integrierten biologischen Aufbereitung von Abwasser mit organischen Verunreinigungen im BSD von bis zu 3000 mg/dm³ und mit Fetten von bis zu 300 mg/dm³ umfasst Biogerinnungs- und Schwimmaufbereitungsvorrichtungen, kombinierte biologische Aufbereitungsvorrichtungen und eine Hauptrohrleitungs-Umlaufpumpe, die in der Mischkammer einer zweiten kombinierten Vorrichtung befestigt und mit den Spritzleitungen derselben Vorrichtung, mit der Mischkammer der ersten kombinierten Vorrichtung und mit dem Wasserstrahf-Belüfter der Biogerinnungs- und Schwimmaufbereitungsvorrichtung oder mit der Überschussschlempenaufbereitungsvorrichtung verbunden ist. Die Einspeisekammer des Wasserstrahlbelüfters weist aerobe Säulen mit einer Länge von 0,3 - 1,5 m, deren Neigungswinkel zum Drehzapfen 0 - 50° betragen, und tangentiale Passstücke auf.

Weiterhin weist die Erfindung folgende Merkmale auf: Die Anlage zur integrierten biologischen Aufbereitung von Abwasser mit organischen Verunreinigungen im BSD von bis zu 50000 mg/dm³, mit Schwefelwasserstoff, Hydrosulfiden und Ammoniakstickstoff bis zu 100 mg/dm³ umfasst (für Verunreinigungskonzentrationen im BSD von bis zu 3000 mg/dm³) mechanische Aufbereitungsvorrichtungen und (bis zu 50000 mg/dm³ im BSD) aerobe Bioreaktoren, eine Abwasser- und Schlempenmischkammer mit Umlaufpumpen und kombinierte biologische Aufbereitungsvorrichtungen, wobei die Abwasserförderleitungen mit den Mischkammern der kombinierten biologischen Aufbereitungsvorrichtungen verbunden sind. Die für die Hauptrohrleitung bestimmte Umlaufpumpe, die in der Mischkammer der ersten kombinierten Vorrichtung befestigt ist, ist sowohl an die Spritzleitung als auch an die Mischkammer der zweiten kombinierten Vorrichtung angeschlossen; vor allem ist die für die Hauptrohrleitung bestimmte und in der Mischkammer der zweiten kombinierten Vorrichtung befestigte Umlaufpumpe mit der Mischkammer der ersten kombinierten Vorrichtung und mit der Überschussschlempenaufbereitungsvorrichtung verbunden.

Weiterhin weist die Erfindung folgende Merkmale auf: Der aerobe Bioreaktor umfasst Verteilrohrleitungen zum Zirkulieren von Flüssigkeit, die um 0,3 - 2,5 m abfallen, unter einem Fallwinkel von 0 - 70° zum Drehbolzen befestigt und mit tangentialen Passstücken versehen sind.

Weiterhin weist die Erfindung folgende Merkmale auf: Die Mischkammern der ersten und/oder zweiten kombinierten Vorrichtung sind mit Wasserstoffperoxid durchleitenden Rohrleitungen verbunden.

Weiterhin weist die Erfindung folgende Merkmale auf: Der Aufbau umfasst Nitratreduzierer und/oder Bioreaktoren für die Nachaufbereitung mit künstlichem Futter. Eine Mischvorrichtung ist an diejenige Rohrleitung angeschlossen, die Klärflüssigkeit von der ersten und/oder der zweiten kombinierten Vorrichtung zu den Nitratreduzierem verteilt. Ein Kraftnetz für die Umlaufpumpen der ersten und/oder der zweiten kombinierten Vorrichtung und die Rohrleitungen, die eine Gerinnungslösung durchleiten, sind an diese Mischvorrichtung angeschlossen.

Weiterhin weist die Erfindung folgende Merkmale auf: Das Bioreaktorfutter besteht aus Kunststoff- oder Keramiktafeln mit Drehgelenken oder aus 10 - 100 mm langen Platten mit Löchern, die einen Durchmesser von 3 - 30 mm aufweisen. Die Abstände zwischen den Drehgelenken oder Platten und die Durchmesser der Löcher nehmen allmählich vom oberen Abschnitt des Futters bis zu dessen unterem Abschnitt ab. Die Tafeln, Drehgelenke oder Platten besitzen Greifzähne mit einer Länge von 0,1 - 1,5 mm; das Futtermaterial umfasst Metallzusammensetzungen.

Weiterhin weist die Erfindung folgende Merkmale auf: Die Anlage umfasst zusätzlich einen Absorptionsfilter mit einem Futter, das eine chemische Absorption von Phosphat gestattet, wobei dieser Filter mit der kombinierten biologischen Aufbereitungsvorrichtung und/oder mit einer Denitrifiziervorrichtung und/oder dem Bioreaktor verbunden ist.

Weiterhin umfasst die Anlage zusätzlich eine Überschussschlempenaufbereitungsvorrichtung, deren Eindickungsvorrichtung Rohrleitungen aufweist, die von der kombinierten biologischen Aufbereitungsvorrichtung und/oder von der Biogerinnungsvorrichtung und/oder vom anaeroben Bioreaktor wegführen. Diese Eindickungsvorrichtung ist mit einer Bandfifterpresse verbunden, deren einen entwässerten Kuchen antreibende Vorrichtung mit einer Kömungsvorrichtung verbunden ist, an der auch eine Abgabeleitung (für organische und/oder mineralische Additive) befestigt ist. Eine die Körner fördernde Vorrichtung ist mit einem Rollenförderer, der mit elektrischen Heizelementen versehen ist, und/oder mit Mikrowellenstrahlern verbunden, die aufeinanderfolgend an einen Speichertank angeschlossen sind.

Schließlich weist die Erfindung noch folgende Merkmale auf: Bei der Installation für eine tiefe biologische Abwasserbehandlung werden die Luftleitungen von den kombinierten biologischen Aufbereitungsvorrichtungen, von den Überschussschlempenaufbereitungsvorrichtungen, von den Bioreaktoren, von den Räumen für die integrierte mechanische Aufbereitungsvorrichtung und von Sandauffangvorrichtungen nacheinander mit einem Saugpassstück eines Hochdrucklüfters verbunden, dessen Hauptluftleitung wiederum an die Bewässerungskammer der Luftbehandlungsvorrichtung angeschlossen ist. Die Vorrichtung ist mit einer Spritzleitung versehen, die mit der Umlaufpumpe verbunden ist, deren Saugpassstück an einen lufttauglichen Abschnitt der Vorrichtung angeschlossen ist. Über dem lufttauglichen Abschnitt befinden sich ein Anklemmabschnitt der Vorrichtungen, der mit einem künstlichen Futter gefüllt ist, ein Sammeltablett mit direkten luftzuführenden Rohrleitungen (ihre Länge beträgt 1,2 - 2,5 m, sie sind 0,4 - 0,7 m in der Flüssigkeit des lufttauglichen Abschnitts tiefer gelegt und in ihrem unteren Abschnitt mit Rohrleitungen geringer Durchmesser angefüllt) und zur Wasserstrahl-Luft-Ausspritzung dienende Rohrleitungen, die am Ableitungstank befestigt, 0,6 - 1,8 m über der Flüssigkeit angeordnet und in der Flüssigkeit 1 - 3 m tiefer gelegt sind. Die Luftbehandlungsvorrichtung besitzt eine Verbindung zu einem eine Natriumhypochloritlösung enthaltenden Tank, zu einem ein Odorisierungsmittel enthaltenden Tank und zu einer Luftleitung, die wiederum mit einer Wassertropfen-Beseitigungsvorrichtung verbunden ist, die aufeinanderfolgend an einen aktivierten Kohlenstofffilter und an eine UltraviolettDesinfektionseinheit angeschlossen ist.

Die Erfindung wird nun anhand bestimmter Ausführungsbeispiele näher erläutert, die Varianten der Anlage zur integrierten biochemischen Aufbereitung von Abwasser darstellen, das verschiedene Inhalte von organischen Verunreinigungen, Schwefelwasserstoff, Hydrosulfiden und Ammoniakstickstoff aufweist. Diese typischen Ausführungsbeispiele beschränken überhaupt nicht andere Versionen der Erfindung, sondern erläutern nur das Wesen der Erfindung.

### Kurzbeschreibung der Figuren

Bestimmte Ausführungsbeispiele von Varianten der biochemischen Abwasseraufbereitungsanlage werden bildlich erläutert. Es zeigen:

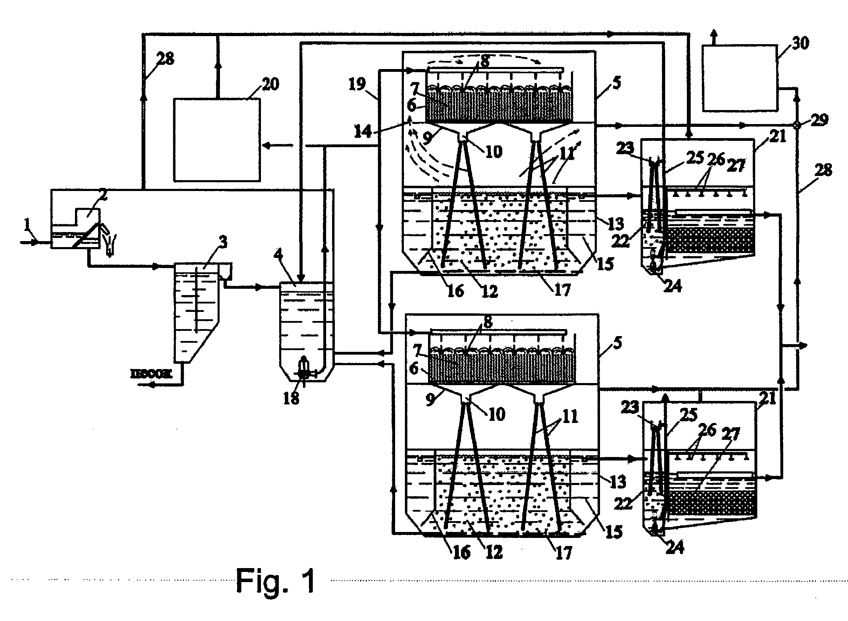

- Fig. 1: eine schematische Variante eines Flussschemas für eine integrierte biochemische Abwasseraufbereitungsanlage, wobei die Verunreinigungskonzentration im BSD bis zu1000 mg/dm³ und die Konzentration an Schwebeteilchen bis zu 700 mg/dm³ beträgt,
- Fig. 2: einen Skalenabschnitt eines in Fig. 1 gezeigten Biofilters,
- Fig. 3: einen Schnitt längs der Linie A-A in Fig. 2,
- Fig. 4: einen Skalenabschnitt des in Fig. 1 gezeigten Biofiltersammeltabletts und Ableitungskollektors,
- Fig. 5: einen Schnitt längs der Linie B-B in Fig. 4,
- Fig. 6: eine Vorderansicht einer gewellten Keramiktafel des Biofilterfutters,
- Fig. 7: einen Schnitt durch eine einzelne gewellte Keramiktafel,
- Fig. 8: einen Schnitt durch mehrere aneinander angepasste Keramiktafeln,
- Fig. 9: einen maßstabgerechten Schnitt durch einen oberen Teil einer Keramiktafel,

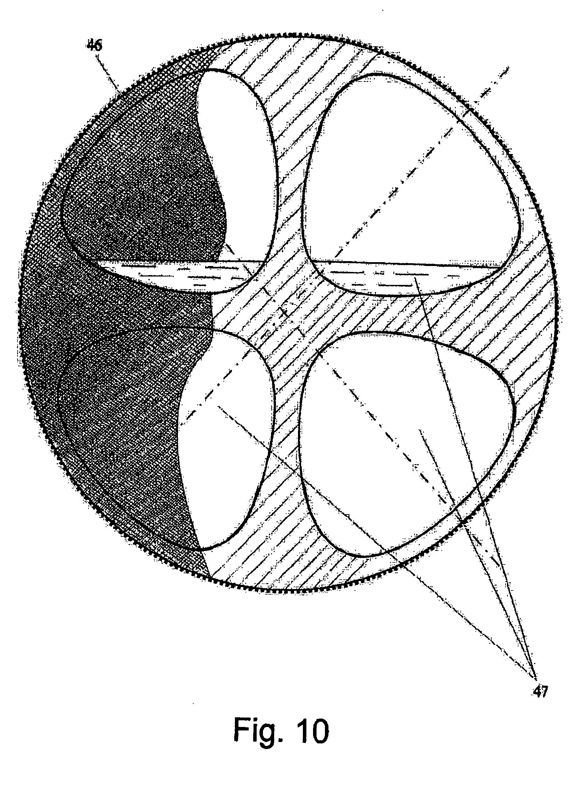

- Fig. 10: einen Schnitt durch ein Kugelelement des Biofilterfutters,
- Fig. 11: einen maßstabgerechten Schnitt längs der Linie A-A in Fig. 12, und zwar durch den Lufttanktrenner mit dreieckförmigen Rollen, biologischen Futterblöcken, aeroben Säulen und einer die Schlempe führenden Rohrleitung,
- Fig. 12: einen Schnitt längs der Linie B-B in Fig. 11,
- Fig. 13: eine Draufsicht auf eine Futtertafel des Bioreaktors,
- Fig. 14: einen Schnitt durch eine Futtertafel des Bioreaktors,
- Fig. 15: eine schematische Variante eines Flussschemas für eine integrierte biochemische Abwasseraufbereitungsanlage, wobei die Verunreinigungskonzentration im BSD bis zu 1500 mg O₂/dm³, die der Schwebstoffe bis zu 700 mg/dm³ und die des Schwefelstoffs, der Hydrosulfide und des Ammoniakstickstoffs bis zu 100 mg/dm³ beträgt,
- Fig. 16: eine schematische Ansicht einer universellen Variante eines Flussschemas für, eine integrierte biochemische Abwasseraufbereitungsanlage, wobei die Verunreinigungskonzentration im BSD 1500 - 3000 mg O₂/dm³, die der Schwebstoffe bis zu 1500 mg/dm³, die der Fette bis zu 300 mg/dm³ und die des Schwefelstoffs, der Hydrosulfide und des Ammoniakstickstoffs bis zu 100 mg/dm³ beträgt, als auch für eine Anlage mit Konzentrationen organischer Verunreinigungen in der Größe von 3000 - 50000 mg/dm³,
- Fig. 17: ein Flussschema für eine Überschussschlempenaufbereitung,
- Fig. 18: ein Flussschema der verwendeten Luftbehandlungsvorrichtung und
- Fig. 19: einen maßstabsgerechten Schnitt durch eine Rohrleitung zur direkten Abgabe von Luft.

### Beste Ausführungsvarianten gemäß der Erfindung

Die Anlage für eine tiefgreifende biochemische Aufbereitung von Abwasser, deren BSD 1000 mg/dm³ und deren Schwebstoffe 700 mg/dm³ erreichen, umfasst eine Abwasser zuführende Rohrleitung 1, die mit einer integrierten mechanischen Aufbereitungsvorrichtung 2 verbunden ist, die wiederum mittels einer Rohrleitung an eine vertikale Sandauffangvorrichtung 3 angeschlossen ist. Das Sammeltablett der vertikalen Sandauffangvorrichtung 3 ist mittels einer Ableitungsrohrleitung mit einer Mischkammer 4 verbunden, die an biologische Aufbereitungsvorrichtungen 5 angeschlossen ist. Die kombinierten biologischen Aufbereitungsvorrichtungen 5 bestehen aus Biofiltern 6 mit Futter 7, die mit Spritzleitungen 8 versehen sind, mit Sammeltabletts 9 und mit Ableitungskollektoren 10. An diese Ableitungskollektoren sind Belüftungssäulen 11angeschlossen, die in Belüftungszonen 12 von Absetzvorrichtungen 13 des Belüftungstanks eingetaucht sind. Die Trennwand, die den Biofilterraum vom Lufttanktrennerraum trennt, sollte Ventile oder Löcher für einen Luftbypass 14 aufweisen. Die Belüftungsabsetztanks 13 der Belüftungszonen 12 sind von den Absetzzonen 15 durch Trennwände 16 getrennt. Der Außenumfang des konischen Teils des Bodens des Belüftungsabsetztanks 13 ist mit die Schlempe ableitenden Rohrleitungen 17 versehen. Diese Rohrleitungen sind mit der Mischkammer 4 verbunden, die eine Umlaufpumpe 18 aufweist. Eine Hauptrohrleitung 19 ist an beide Spritzleitungen 8 der kombinierten biologischen Aufbereitungsvorrichtungen 5 und an eine Überschussschlempenaufbereitungsvorrichtung 20 angeschlossen.

Die in den Absetzzonen 15 befestigten Sammeltabletts sind mittels einer Schwerkraftrohrleitung mit Bioreaktoren 21 verbunden. Diese Bioreaktoren weisen Belüftungskammern 22 mit einem Wasserstrahlbelüfter 23 und einer Pumpe 24 auf. Die Pumpe 24 wiederum ist mit einer Hauptrohrleitung 25 mit dem Wasserstrahlbelüfter 23, der Mischkammer 4 und einer Spritzleftung 26 des Bioreaktors 21 verbunden. Die Belüftungskammer 22 ist durch eine Trennwand von einem Futter 27 eines eingetauchten Filters getrennt. Die kombinierten biologischen Aufbereitungsvorrichtungen 5 und die Bioreaktoren 21 sind durch Luftleitungen 28 mit einem Lüfter 29 einer verwendeten Luftbehandlungsvorrichtung 30 verbunden.

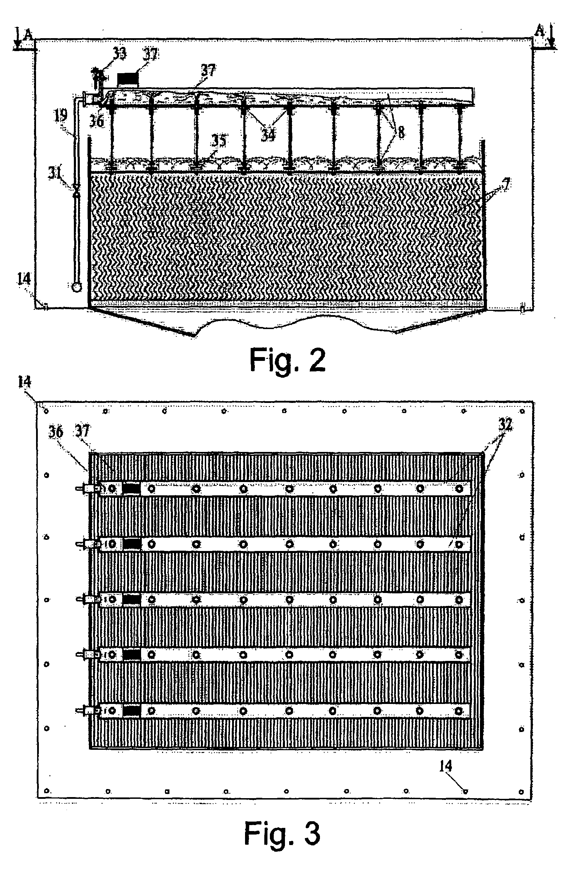

Der Spritzleitungsaufbau des Biofilters 6 weist Hauptrohrleitungen mit Ventilen 31 (Figuren 2, 3), Verteiltabletts 32 mit Toren 33, Entleerungspassstücke 34 und Reflexionsscheiben 35 auf. Die primären Entleerungspassstücke 34 besitzen vorgebaute Leitplatten 36. Die Tabletts 32 sind mit Helium-Neon-Laser 37 ausgerüstet.

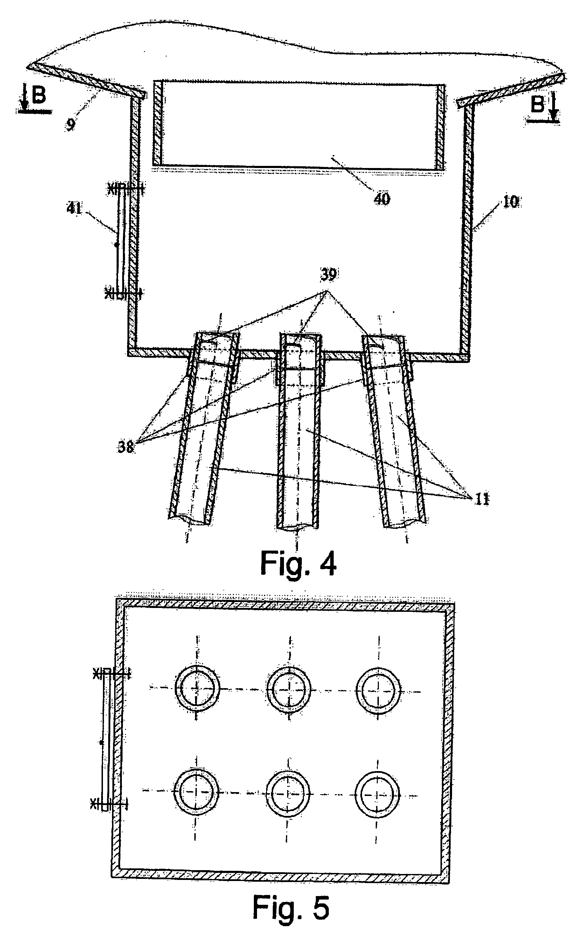

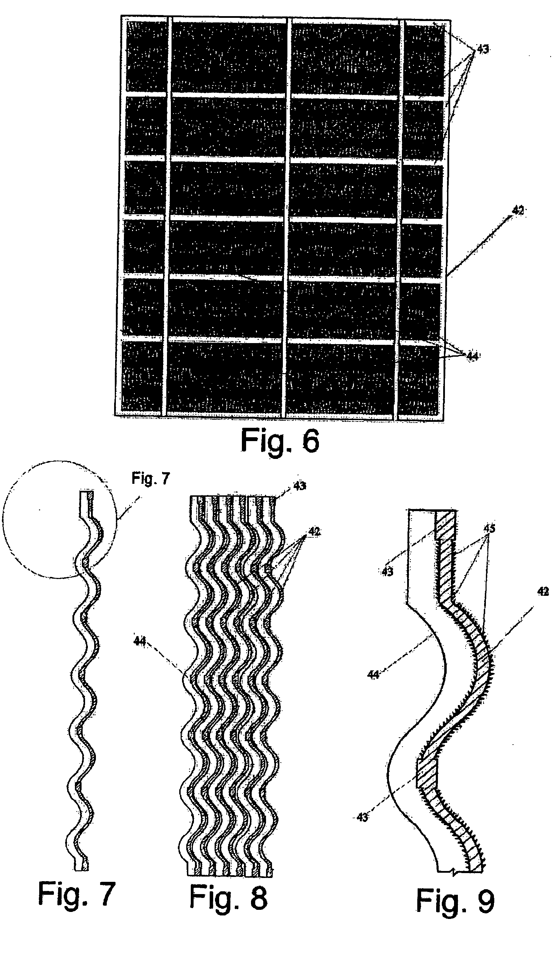

Der Boden des Ableitungskollektors 10 (Fig. 4) weist angeschweißte Muffen 38 auf, deren untere Teile mit eingeschraubten Belüftungssäulen 11 versehen sind, und deren obere Teile Passstücke 39 aufweisen. Während des Hydrauliktests mit Reinwasser markieren sie den Wasserstand auf den Passstücken 39, die danach ausgeschraubt, schräg abgeschnitten und dann wieder in die Muffen 38 eingeschraubt werden. Die Passstücke 39 weisen helixförmige Vertiefungen auf. Der Ableitungskollektor 10 ist mit Leitreflektoren 40 und mit einem Bedienungszugang 41 versehen. Das Biofilterfutter ist aus gewellten Keramiktafeln 42 mit einem Rahmen aus parallelen wellenförmigen Längsbändem 43 (Fig. 6) hergestellt. Ein Teil der Längsbänder 44 sind als wellenförmige Trennwände ausgebildet. Die Oberfläche der Tafeln 42 mit Ausnahme der der Bänder ist durch eine deutliche Rauheit gekennzeichnet, das sind Greifzähne 45 (Fig. 9).

Das künstliche Futter für die Biofilter kann durch Futterelemente 46 gebildet sein, die als Kugeln mit Hohlräumen in ihrer Oberfläche ausgebildet sind, deren Achsen sich im Kugelmittelpunkt schneiden.

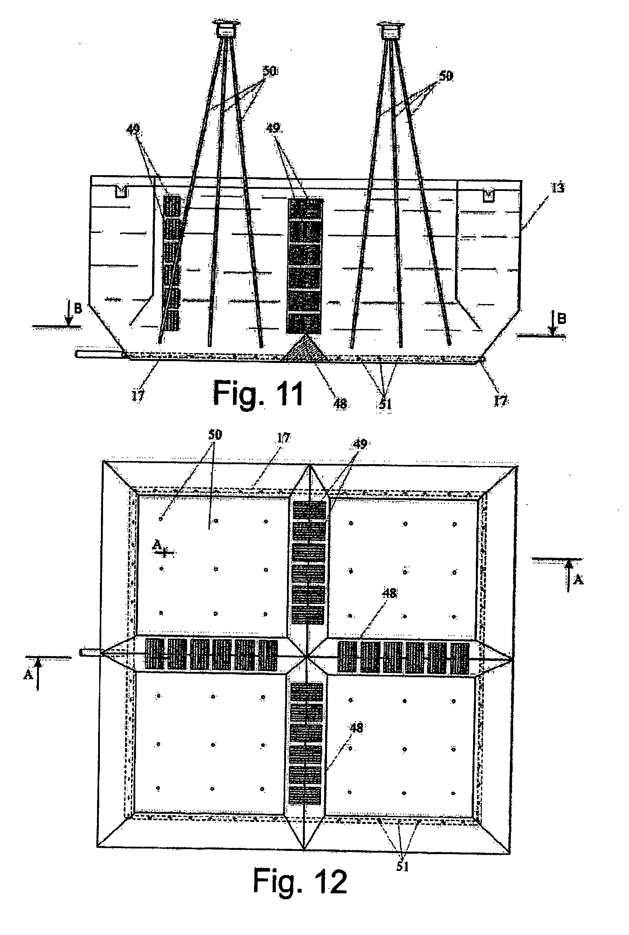

Die kombinierten biologischen Aufbereitungsvorrichtungen weisen einen Boden des Lufttanktrenners 13 auf, der durch dreieckförmige Rollen 48 (Figuren 11, 12) in Zellen eingeteilt ist, wobei über diesen Rollen Blöcke mit biologischem Futter 49 angeordnet sind. Die flachen Abschnitte des Bodens des Belüftungstanks 13 weisen Belüftungssäulen 50 auf. Der Außenumfang des konischen Teils des Bodens des Lufttanktrenners 13 weist eine die Schlempe ableitende Rohrleitung 17 auf, die mit eben angeordneten Löchern oder Passstücken 51 versehen ist.

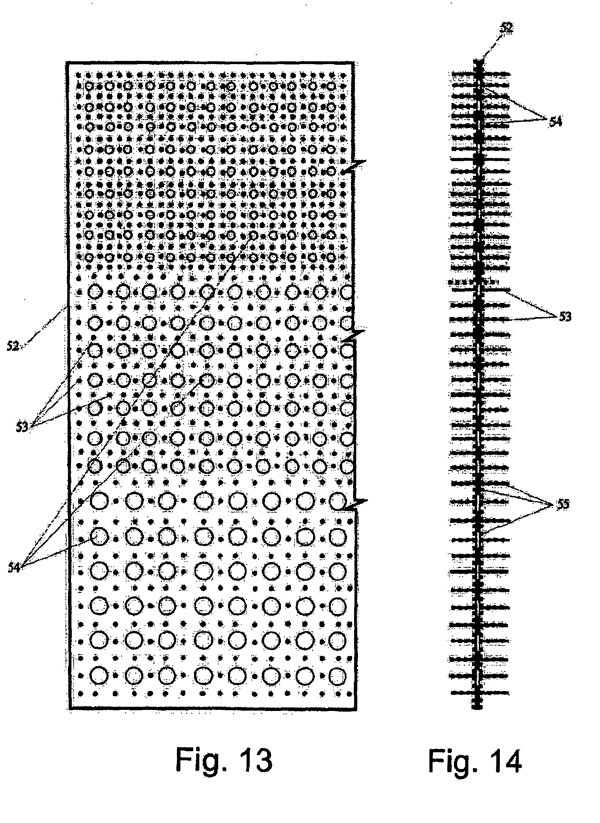

Das Sammeltablett des Lufttanktrenners 13 ist mittels einer Rohrleitung mit dem Bioreaktor 21 verbunden. Das künstliche Futter 27 des Bioreaktors 21 ist aus Kunststoff- oder Keramiktafeln 52 (Figuren 13, 14) gefertigt, die an diesen befestigte Drehgelenke oder Platten 53 aufweisen. Diese Tafeln sind mit Löchern 54 versehen. Die Tafeln, Drehgelenke oder Platten weisen Greifzähne 55 auf.

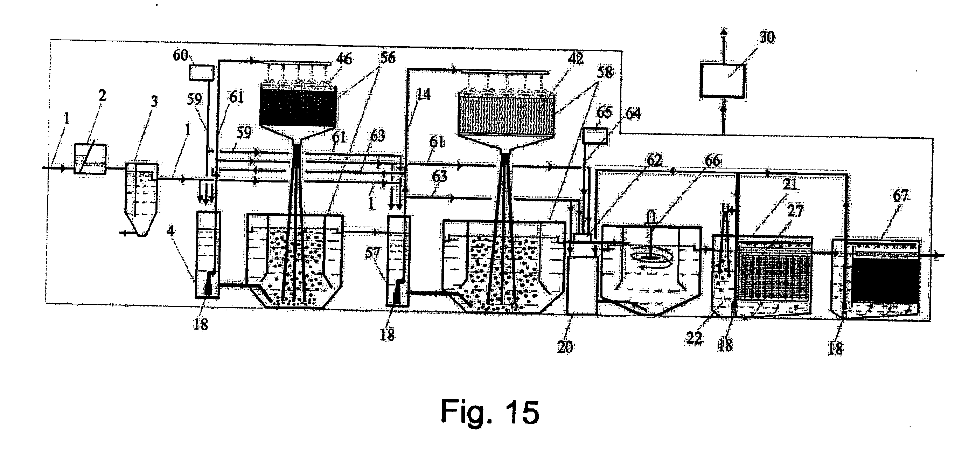

Die Erfindungsvariante einer Anlage zur integrierten Aufbereitung von Haushalts- und Industrieabwasser mit einem Gehalt an organischen Verunreinigungen im BSD von bis zu 1500 mg/dm³, Schwebstoffen bis zu 700 mg/dm³, einem gesamten Schwefelwasserstoff-, Hydrosulfid- und Ammoniakstickstoffgehalt von bis zu 100 mg/dm³ weist auch eine Abwasserdurchführungsrohrleitung 1, eine integrierte mechanische Aufbereitungsvorrichtung 2, eine Sandauffangvorrichtung 3 und eine Mischkammer 4 mit einer in dieser installierten Umlaufpumpe 18 auf. Die Mischkammer 4 ist mittels einer Freiflussrohrleitung mit einer ersten kombinierten biologischen Aufbereitungsvorrichtung 56 (Fig. 15) verbunden. Das Sammeltablett der kombinierten Vorrichtung 56 ist wiederum mittels einer Rohrleitung mit einer Mischkammer 57 einer zweiten biologischen Aufbereitungsvorrichtung 58 verbunden. Eine zu den Mischkammern 4 und 57 führende Rohrleitung 59 verbindet einen Mischvorrichtungstank 60 mit einer Wasserstoffperoxidlösung. Eine Hauptrohrleitung 61 der in der Mischkammer 4 angeordneten Umlaufpumpe 18 ist mit einer Spritzleitung des Biofilters der kombinierten biologischen Aufbereitungsvorrichtung 56, mit der Mischkammer 57 der Vorrichtung 58 und mit einer Mischvorrichtung 62 verbunden. Der Biofilter der Vorrichtung 56 ist mit einem Futter aus kugelförmigen Elementen 46 gefüllt. Eine Hauptrohrleitung 63 der in der Mischkammer 57 angeordneten Umlaufpumpe 18 ist mit einer Biofilterspritzleitung der Vorrichtung 58 und mit der Mischkammer 4 verbunden. Die Hauptrohrleitung 63 ist mit der Mischvorrichtung 62, die an der Reinwasser führenden Rohrleitung angeschlossenen ist, und mit der Überschussschlempenaufbereitungsvorrichtung 20 verbunden. Die Mischvorrichtung 62 weist auch eine eine Gerinnungslösung führende Rohrleitung 64 auf, die vom Mischvorrichtungstank 65 zur Mischvorrichtung 62 verläuft. Die Mischvorrichtung 62 ist ferner über eine Rohrleitung zur Denitrifizierung mit einer mechanischen Mischvorrichtung 66 verbunden. Das Sammeltablett der Absetzzone der Denitrifiziervorrichtung ist mit der ein künstliches Futter 27 aufweisenden Belüftungskammer 21 des Bioreaktors verbunden. Der Bioreaktor wiederum ist mit einem Absorptionsfilter 67 verbunden. Ins Auge gefasst sind eine Desinfektion und Desodoration der chemisch verwendeten Luft in der Vorrichtung 30.

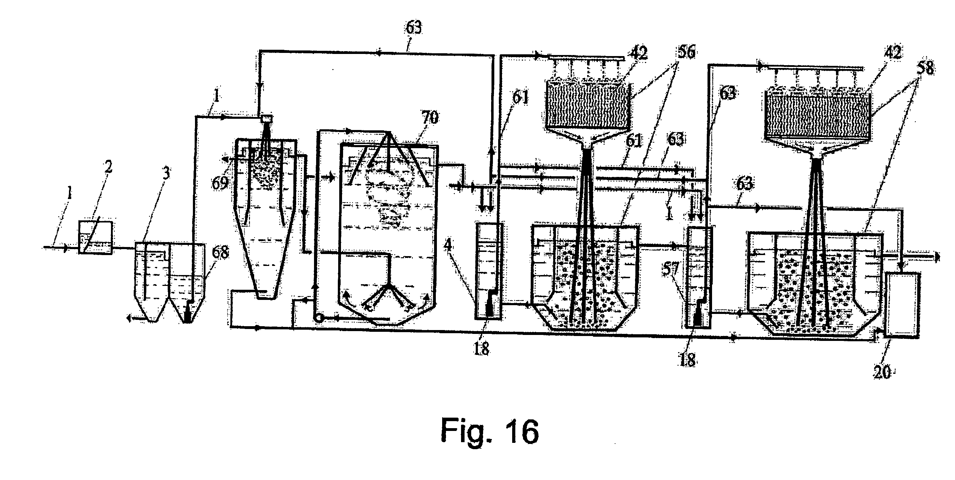

Im Fall der Aufbereitung von industriellem Abwasser, dessen organische Verunreinigungen im BSD 1500 - 3000 mg/dm³, dessen Schwebstoffe bis zu 1500 mg/dm³ und dessen Fette bis zu 300 mg/dm³ betragen, weist das Flussschema eine Abwasser fördernde Rohrleitung 1, eine integrierte mechanische Aufbereitungsvorrichtung 2, eine Sandauffangvorrichtung 3 und eine Abwasserpumpvorrichtung 68 (Fig. 16) auf. Die Pumpenhauptrohrleitung ist mit der Einspeisekammer einer Biokoagulator- und Flotator-Vorrichtung 69 verbunden. Ferner ist die Reinwasser führende Rohrleitung mit der Mischkammer 4 der ersten kombinierten biologischen Aufbereitungsvorrichtung 56 und mit der Mischkammer 57 der zweiten kombinierten biologischen Aufbereitungsvorrichtung 58 verbunden. Die Hauptrohrleitung 63 der in der Mischkammer 57 angeordneten Umlaufpumpe 18 ist gleichzeitig mit der Biofilterspritzleitung der Vorrichtung 58, der Mischkammer 4, der Einspeisekammer des Wasserstrahlbelüfters der Biokoagulator- und Flotator-Vorrichtung 69 und der Überschussschlempenaufbereitungsvorrichtung 20 verbunden.

Wenn die Konzentrationen der organischen Verunreinigungen im BSD 3000 - 50000 mg/dm³ betragen, ist die Hauptrohrleitung der Pumpvorrichtung 68 mit der Einspeisekammer der Biokoagulator- und Flotator-Vorrichtung 69 oder einem anaeroben Bioreaktor 70 verbunden. Dieser anaerobe Bioreaktor ist wiederum mit den Mischkammern 4 und 57 verbunden. Wenn dem Flussschema die Biokoagulator- und Flotator-Vorrichtung fehlt, ist die Hauptrohrleitung 63 der in der Mischkammer 57 angeordneten Umlaufpumpe 18 nur mit der Biofilterspritzleitung der Vorrichtung 58, mit der Mischkammer 4 und mit der Überschussschlempenaufbereitungsvorrichtung 20 verbunden.

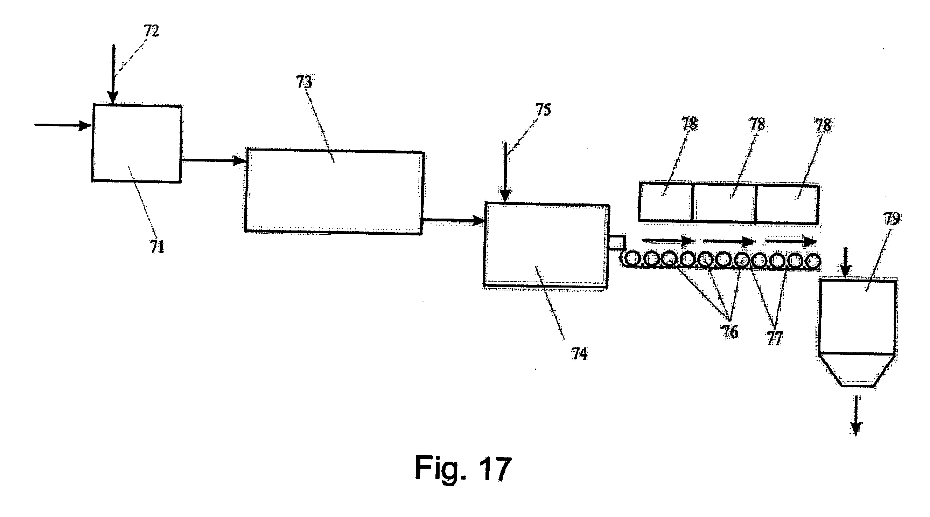

In Abhängigkeit eines geeigneten Flussschemas verlaufen die die Überschussschlempe führenden Rohrleitungen von den kombinierten biologischen Aufbereitungsvorrichtungen 5, 58, von der Denitrifiziervorrichtung 66, von der Blokoagulatorvorrichtung 69 und von dem anaeroben Bioreaktor 70 zu einer Eindickvorrichtung 71 der Überschussschlempenaufbereitungsvorrichtung 20. Auf demselben Weg verläuft eine Leitung 72 (Fig. 17) zur Abgabe von Reagenzien (Gerinnungsmitteln und/oder Flockungsmitteln). Die die eingedickte Absetzungen führende Rohrleitung ist mit einer Bandfilterpresse 73 verbunden, die wiederum an eine Kömungsvorrichtung 74 angeschlossen ist, an die auch eine organische und/oder mineralische Zusätze abgebende Leitung 75 angeschlossen ist. Die Köder abgebende Vorrichtung ist mit einem Rollenförderer 76 verbunden. Dabei weisen die Rollen elektrische Heizelemente auf, oder Heizungselemente 77 sind unter der Transportvorrichtung angeordnet. Die Transportvorrichtung weist Mikrowellenabstrahlvorrichtungen 78 auf. Es ist auch ein Tank 79 vorhanden, der die Körner aufnimmt und speichert.

Die verwendete Luftbehandlungsvorrichtung 30 für die Anlage umfasst Luftleihungen 28, die mit Saugpassstücken des Hochdrucklüfters (HPF) 29 verbunden sind. Die Hauptluftleftung des Hochdrucklüfters 29 wiederum ist mit einer Bewässerungskammer 80 (Fig. 18) der Luftbehandlungsvorrichtung 30 verbunden. Die Vorrichtung 30 ist mit Spritzleitungen 81 versehen, die an eine Umlaufpumpe 82 angeschlossen sind, deren Saugpassstück mit einem luftgeeigneten Abschnitt 83 der Umlaufpumpe verbunden ist. Der luftgeeignete Abschnitt 83 weist einen anklippsbaren Abschnitt 84, der mit einem künstlichen Futter gefüllt ist, und auch ein Sammeltablett 85 auf, an die direkte lufteinspeiserohrleitungen 86 (Fig.19) angeschlossen sind. Die Rohrleitungen 86 sind 1,2 - 2,5 m lang, 0,4 - 0,7 m tief in die Flüssigkeit des luftgeeigneten Abschnitts eingetaucht und in ihrem unteren Abschnitt mit Rohrleitungen 87 geringen Durchmessers verbunden. Wasserstrahl-Luft-Spritzrohrleitungen 88 sind mit einem Ableitungskollektor 89 verbunden, in einer Höhe von 0,6 - 1,8 m über der Flüssigkeit befestigt und um 1 - 3 m in die Flüssigkeit eingetaucht. Die Luftbehandlungsvorrichtung 30 weist einen Tank 90 mit einer Natriumhypochloritlösung, einen Odoranslösungstank 91 und eine mit der Vorrichtung 30 verbundene Luftleitung 92 auf. Die Luftleitung 92 ist wiederum an einen Wassertropfeneliminator 93 angeschlossen, der ausgangsseitig mit einem Aktivkohiefilter 94 und einer Ultraviolettdesinfektionseinheit 95 verbunden ist.

Die beschriebene integrierte biochemische Abwasseraufbereitungsanlage arbeitet folgendermaßen.

Im Fall einer integrierten Aufbereitung von Haushalts- und Industrieabwasser mit einem Gehalt an organischen Verunreinigungen im BSD von bis zu 1000 mg O₂/dm³ und an Schwebstoffen bis zu 700 mg/dm³ wird das Abwasser über die Rohrleitung 1 zur integrierten mechanischen Aufbereitungsvorrichtung 2 mit Spalten von 2 - 4 mm gefördert, über die Feststoffschadstoffe aufgefangen werden. Dann gelangt das Abwasser zur vertikalen Sandauffangvorrichtung 3, in der der Sand abgeschieden wird. Danach gelangt das Abwasser zur Mischkammer 4 und dann zur kombinierten biologischen Aufbereitungsvorrichtung 5. Die Schlempe aus den Belüftungszonen 12 gelangt (unter hydrostatischem Druck) über die Freiflussrohrleitungen 17 zur Mischkammer 4. Im Fall der beschriebenen biochemischen Abwasseraufbereitungsanlage mit 2 - 4 kombinierten biologischen Aufbereitungsvorrichtungen ist nur eine einzelne Umlaufpumpe 18 vorhanden. Dies ist durch die für Aufbereitungsanlagen geltenden konstruktiven Erfordernisse, die die hydrodynamischen Flüsse in den Biofiltern und Belütungsabsetztanks behandeln, und auch durch zeitweilige Abschaltungen einiger Elemente bedingt. Eine große Anzahl von kombinierten biologischen Aufbereitungsvorrichtungen und die einzelne Umlaufpumpe 18 machen es zu schwierig, die hydrodynamische Arbeitsweise der Biofilter und der Belüftungsabsetztanks zu steuern. Eine halbindustrielle Untersuchung hat gezeigt, dass es bei einer Anzahl von 4 - 6 kombinierten biologischen Aufbereitungsvorrichtungen ratsam ist, die Mischkammer der Aufbereitungsanlageneinheit mit zwei gleichzeitig arbeitenden Pumpen auszustatten, die durch Folientor-Scheidewände unterteilt sind.

Von den Mischkammern 4 wird das Abwasser mittels der Umlaufpumpe 18 durch die Hauptrohrleitung 19 zur Spritzleitung 8 des Biofilters 6 gefördert. Die Rohrleitung 19 fördert auch die Überschussschlempe zur Vorrichtung 20. Die in den Hauptrohrleitungen angeordneten Ventile 31steuern die Abwasserflussrate jedes Verteiltabletts 32. Wenn die Schlempenmischung zu den engen Verteiftabletts 32 an den Anfangsabschnitten gelangt, insbesondere wenn die Umlaufpumpe 18 eingeschaltet ist, gibt es eine raue Wellenbewegung in den Tabletts, die dazu führen kann, dass die Flüssigkeit über die Kanten läuft. Eine Verminderung des Flüssigkeitsdrucks und eine entsprechende Flussregulierung in den Tabletts ist vor allem mit Hilfe der Tore 33 möglich. Aufgrund der hohen Flüssigkeitsgeschwindigkeit in den Tablettanfangsabschnitten wird die Ableitung der Flüssigkeit zu den ersten Ableitungspassstücken 34 gehemmt. Um die Strömungsturbulenz vor den Anfangspassstücken zu vermindern, sind Leitplatten 36 vorhanden, die die Ableitung der Flüssigkeit zu den Öffnungen der Passstücke begünstigen.

Der Flüssigkeitsfluss durch die Passstücke wird durch Ändern der Höhe der Passstücke über dem Boden der Tabletts gesteuert. Gleichzeitig sollte versucht werden, die Länge der Passstücke zu verkürzen, weil dies die Masse der Biomasse vermindert, die in den Passstücken festgelegt ist. Dadurch wird die Abgabekapazität der Passstücke entsprechend erhöht. Die empfohlene Länge der Passstücke, die an den Anfängen und Enden der Tabletts befestigt sind, beträgt 2 - 6 Durchmesser. Die Dichte der Fallstrahlen wird aufgrund der Löcher der Ableitungspassstücke 34 erhöht, die als Spiralen mit 1 - 1,5 Umdrehungen mit einer Höhe von weniger als 0,7 Durchmesser ausgebildet sind.

Das optimale Verhältnis zwischen dem Energieverbrauch für die Spritzleitungsarbeit und der Bewässerungsgleichmäßigkeit definiert die folgenden Parameter des Systems: In dem Fall, in dem der Abstand von den oberen Enden der Entleerungspassstücke der Tabletts der Spritzleitungen zu den Reflexionsscheiben 0,8 - 2 m beträgt, sollten die Abstände zwischen den Mittelpunkten der Tabletts und die Abstände zwischen den Achsen der Passstücke in den Grenzen von 0,6 - 1,8 m liegen.

Das Biofilterfutter der Vorrichtungen 5 ist aus gewellten Keramiktafeln 42 hergestellt. Der Einschluss von Metallzusammensetzungen im Material erhöht das elektrokinetische Potential der Materialabsorptionsschicht. Die elektrostatische Adhäsion macht die Kolonien der Mikroorganismen bewegungsunfähig. Der Rahmen 43 der Eindickvorrichtung ist als parallele und längslaufende Bänder ausgebildet. Die längs laufenden Bänder mit nach außen stehenden wellenförmigen Teilstücken sehen eine Konstruktionsfestigkeit vor, da das Gewicht der Biomassenschicht wächst. Die festgelegte Mikrofloraschicht wird durch die Rauheit direkt beeinflusst, die durch die Greifzähne 45 (0,1 - 1,5 mm) bedingt ist. Eine Verminderung der Rauheit der Bänder 43 auf 0,1 - 0,5 mm vermindert den Zusammenhalt mit dem Futtermaterial, das zusammen mit den wellenförmigen Teilstücken die Verminderung der Größe der möglichen Schlammzonen und die Entladung der Überschussbiomasse begünstigt.

Die Futteroberfläche wird durch eine Schicht festgelegter Biomasse gebildet, deren Stärke 10 mm erreicht und die (abgesehen vom Absorbieren der Mikroflora und vom Oxidieren der organischen Unterschicht, nämlich 50 - 70 % der gelösten organischen Stoffe) nitrifizierende und denitrifizierende Mikroorganismen entwickelt.

Der Einschluss von Metallteilchen im Material des Futters 7 erhöht die elektrokinetische Wirkung, die das Potential der Absorptionsfutterschicht ansteigen lässt. Eine halbindustrielle Prüfung zeigte eine Ansammlung einer kompakten Biomasse (deren Stärke 5 - 7 mm betrug) auf den Tafeln mit Metallzusammensetzungen und eine elektroakustische Zerstäubung aufgrund der Einfügung von verschiedenen Zusammensetzungen in die Futteroberflächenschicht, wie Karbide, Kohlenstoffnitride, Intermetallverbindungen usw. Diese Metalleinschlüsse sind Katalysatoren, die die dynamische Aktivität der Mikroorganismen erhöhen. Die Futteraktivzentren absorbieren die Moleküle der Reaktionssubstanz, ihre Konzentration steigt, wodurch die Adhäsion der Oberflächenschicht positiv beeinflusst wird. Die Kombination der strukturmechanischen kinetischen und elektrischen Faktoren stabilisiert die Nitrifizierung und Denitrifizierung, so dass der Zersetzungspegel der stickstoffhaltigen Verunreinigungen in der Anlage erhöht wird.

Die Laserstrahlbehandlung der umlaufenden Mischung aus Abwasser und aktiver Schlempe in den Spritzleitungstabletts der Biofilter mit Hilfe von Helium-Neon-Lasern 37 nach einer Abtastarbeitsweise stimuliert das Wachstum der Bakterien der aktiven Biomasse, insbesondere das Wachstum der nitrifizierenden und denitrifizierenden Mikroorganismen. Ein Test mit einer Strahlungsbehandlung der Schlempe während dreier Minuten mit Helium-Neon-Lasern, deren Wellenlänge 632,8 nm betrug, zeigte ein Wachstum der Bakterienanzahl um den Faktor 5,9 innerhalb einer Stunde nach der Behandlung. Die Erhöhung der biologischen Aktivität der Mikroorganismen vermindert die negative Wirkung der Überlastung der Mikroflora im Fall eines abrupten Anstiegs der organischen und hydraulischen Anlagenbelastungen.

Nachdem die Abwasser- und Schlempenmischung das Futter 7 der Biofilter 6 passiert hat, wird sie mit Hilfe der Tabletts 9 gesammelt und zu den Ableitungskollektoren 10 geleitet. Eine fehlorganisierte Flüssigkeitsableitung, ein ungenügender Abstand zwischen den Mittelpunkten der oberen Abschnitte der Belüftungssäulen 11 und eine Abweichung von den Höhen der Passstücke über den Böden der Ableitungskollektoren verursachen zusammen eine chaotische Bewegung der Flüssigkeit, wodurch sich ein niedrigerer Wirkungsgrad der Luftmitführung in den Belüftungssäulen ergibt. Aus diesem Grund sollte der obere Abschnitt der Ableitungskollektoren Leitreflektoren 40 aufweisen, die den Flüssigkeitsfluss aufnehmen und nach unten lenken. Eine Druckwegnahme begünstigt sogar den Fluss zu den oberen Abschnitten der Belüftungssäulen. Der empfohlene Abstand zwischen den Säulenabschnitten mit einem Durchmesser von 25 - 100 mm im oberen Abschnitt in den Grenzen von 50 - 500 mm vermindert die Turbulenz der Flüssigkeitsflüsse in den Kollektoren 10 und begünstigt eine gleichmäßige Verteilung dieser Flüsse zwischen den Säulen. Eine genaue Orientierung der oberen Säulenabschnitte zum Wasserpegel wird dadurch erreicht, dass die Passstücke 39 hinein- und herausgeschraubt und abgeschrägt werden. Starke Verwirbelungshohlräume für das Luftansaugen in den Belüftungssäulen 11 werden durch die helixförmigen Innenöffnungen in den Passstücken 39 begünstigt, weil sie Umdrehungen im Uhrzeigersinn stabilisieren, wenn die Flüssigkeit in die Rohrleitungen strömt. Wie sich aus einer halbindustriellen Untersuchung ergab, liegt die optimale Höhe der Drallnuträume bei 0,5 Durchmessern. Über die Zugänge 41 werden die Passstücke 39 montiert und die Belüftungssäulen 11 gereinigt.

Der Wirkungsgrad des Transfers der Luftsauerstoffmasse zur Flüssigkeit und das Umrühren des Inhalts der Belüftungszone hängt von folgenden Hauptfaktoren ab: dem Durchmesser der Belüftungssäulen, der Flüssigkeitskapazität (m³/h), dem Verhältnis der Höhe der Belüftungssäulen über der Flüssigkeit zur Höhe des eingetauchten Säulenabschnitts, der Tiefe der Belüftungszone, der Anordnung der Säulen in der Belüftungszone und der Ausbildung des Lufttanktrenners.

Es wird empfohlen, den Innendurchmesser der Belüftungssäulen in den Bereich von 40 - 70 mm zu legen. Ein Bereich des Durchmessers von 25 - 40 mm ist für Anlagen mit kleinerer Kapazität ebenfalls annehmbar, doch in diesem Fall werden die m³/h-Kapazität und die Menge der benötigten Luft besonders negativ durch die Tatsache beeinflusst, dass der Biozönoseanwuchs auf der Innenseite der Rohrleitungen β ≈ 1,5 mm beträgt, so dass die Rohrleitungen regelmäßig gereinigt werden sollten. Die Verwendung von Durchmessern von 70 - 100 mm (mit einem größeren Bypass durch die Säulen) sorgt ebenfalls für einen höheren Massentransferkoeffizienten (Cₛ) in der Rohrleitungskapazität (beispielsweise wenn dy = 70 mm ist, ist q = 9 - 19 m³/h), doch wird dadurch in diesem Fall die Umrührwirksamkeit des ganzen Inhalts der Belüftungszone vermindert. Um für eine ausreichende Erschütterung der Luft-Wasser-Fackeln am Boden zu sorgen, sollte der empfohlene Flüssigkeitsfluss (m³/h) durch die Säulen nicht geringer als die Hälfte der Gesamtheit der Minimalkapazität und der Maximalkapazität sein, die die Verwirbelungshohlräume bilden.

Beim Vorgehen von den optimalen Werten aus ist zu beachten: Der Energieverbrauch für den Flüssigkeitsumlauf durch den Biofilter zu den Belüftungssäulen, zum Belüftungstank und zur Mischkammer, die Konstruktionstiefe der Aufbereitungsanlage und die Wartung der Belüftungssäulen, wobei die empfohlene Höhe der Säulen über dem Flüssigkeitspegel im Belüftungstank für den Kapazitätsbereich der kombinierten biologischen Aufbereitungsvorrichtungen von 5 - 50 m³/Tag 1,2 - 1,8 m und die empfohlene Eintauchtiefe der Säulen über dem Flüssigkeitspegel 1,5 - 2 m beträgt, während die Höhe der unteren Säulenabschnitte über dem Boden 0,05 - 0,2 m beträgt; wenn der Kapazitätsbereich bei 100 - 15000 m³/Tag liegt, sollte die Höhe des oberen Abschnitts der Säulen 2- 3,5 m, die Höhe des eingetauchten Abschnitts der Säulen 2,5 - 4 m und die Höhe der unteren Schnitte der Säulen über dem Boden 0,15 - 0,4 m betragen. Der Abstand zwischen den unteren Schnittfugen von benachbarten Belüftungssäulen (25 - 100 mm) und denjenigen Säulen, die diagonal montiert sind, sollte 0,5 - 3 m betragen. Um die Größe des Bodens der Belüftungstanks zu vermindern, werden dreieckförmige Rollen 48 empfohlen, die auf dem flachen Abschnitt des Bodens der Belüftungszone festgelegt sind. Die optimale Größe der Rollen 48, ausgehend von den Bedingungen der maximalen Größe der Reaktionszone, einer Wirksamkeit des Umrührens der Schlempenflüssigkeit und einer Vermeidung der Schlempenablagerung, ist folgende: Breite 0,5 - 2,0 m; Höhe 0,5 - 1,5 m. Im Fall einer Ablagerung von Schlempenflocken in der Absetzzone 15 des Lufttanktrenners 13 können bleibende Zonen gebildet werden, in die die konischen und flachen Abschnitte des Bodens des Befüftungstanks gegliedert werden, mit einer weiteren Zersetzung und einem weiteren Auftauchen von toter Schlempe. Aus diesem Grund sollte der Minimalabstand von den unteren Enden der äußersten Säulen mit einem Durchmesser von 25 - 50 mm zur Ecke 0,5 - 0,7 m nicht überschreiten, während für Durchmesser von 50-100 mm der genannte Abstand 0,7 - 1,2 m nicht überschreiten sollte. Die Länge des unteren Beins des konischen Teils der Absetzzone 15 sollte die Hälfte der Absetzzonenbreite plus 0,1 - 1,0 m betragen. Gleichzeitig sollte der Abstand vom Boden des konischen Teils der Teilstücktrennbelüftungs- und Absetzzonen zum Boden 0,5 - 1,5 m betragen. Um eine Verminderung des Anstoßes des Gas- und Flüssigkeitsflusses zu vermeiden, der die unteren Enden der Belüftungssäulen 11 und die die Schlempenmischung führende Rohrleitung verlässt, wobei dementsprechend eine Verschlechterung der hydrodynamischen Bedingungen für das Umrühren des Inhalts des Lufttanktrenners 13 auftritt, ist die Rohrleitung 17 hinter dem Außenumfang des Bodens des konischen Teils des Lufttanktrenners befestigt. Dabei sind Löcher oder Passstücke 51 unter einem Winkel von 0 - 90° zur Längsachse der Rohrleitung und mit einem Abstand von 0,2 - 1,0 m voneinander angeordnet.

Daher schließen alle erwähnten Parameter der Anordnung der Belüftungssäuten und der Lufttanktrenner-Aufbauvorrichtungen, der Wasser-Luft-Fackel-Erschütterung am Boden der Belüftungszone, der hydrodynamischen Bewegung des Flüssigkeitsflusses und dem Auftauchen von Luftblasen jede aktive Schlempenablagerung und -zersetzung aus.

Zur Anbindung und Entwicklung der Mikroflora, die die organischen Stoffe oxidiert und die Nitrifizierung ausführt, weisen die Beleftungszonenbehälter der Belüftungsabsetztanks der kombinierten biologischen Aufbereitungsvorrichtungen über den Rollen 48 biologische Futterblöcke 49 auf, die aus Kunststoffplatten mit Löchern, die einen Durchmesser von 3 - 30 mm aufweisen, und mit Borsten, die eine Länge von 5 - 50 mm aufweisen, hergestellt sind. Die Blöcke 49 können auch aus Keramiktafeln bestehen, die Löcher mit einem Durchmesser von 3 - 30 mm und Greifzähne aufweisen, die als 5 - 40 mm lange Drehgelenke oder Platten ausgebildet sind. Die Tafeln, Drehgelenke oder Platten weisen eine bedeutende Rauheit in Form von Greifzähnen auf. Diese Rauheit begünstigt die Festlegung der unbeweglichen Mikroflora auf der Futteroberfläche. Der Einschluss von Metallzusammensetzungen im Material erhöht die elektrostatische Adhäsion der Mikroflora, wobei diese Adhäsion zusammen mit der Verminderung der Turbulenz des Flüssigkehsflusses im Futter die ältere nitrifizierende Schlempenentwicklung begünstigt. Die Verminderung der Turbulenz des Flüssigkeitsflusses im Futter vermindert das Abtragen der adaptierten aktiven Schlempe. Die Konzentration der aktiven Biomasse im eingetauchten Futter 49 kann 10 g/dm³ erreichen.

Die Reaktionsvolumen der Belüftungs- und Absetzzonen oxidieren den Restteil der organischen Verunreinigungen (30 - 50 %) bei niedrigen Belastungen mit Schlempe von = 0,1 - 0,2 g BSD/g Schiempe/Tag, so dass eine Mineralisierung der verbrauchten Biomasse der Biofilterfutter eintritt. Der Aschegehalt der Schlempe während der entwickelten Nitrifizierung und partiellen Denitrifizierung beträgt 33 - 42 %, und der durchschnittliche spezifische Widerstand der Wasserabgabekapazität beträgt 38 - 45.10⁻¹⁰ cm/g. Die Überschussschlempe enthält Kohlenstoff; Stickstoff, Phosphor und Spurenelemente und ist durch eine hohe Mineralisierung und hervorragende Wasserabgabekapazität gekennzeichnet, zersetzt sich nicht und kann daher nach einer Nachbehandlung als Dünger verwendet werden.

Das gereinigte Wasser wird aus den Absetzzonen 15 zu den Sammeltabletts abgeleitet und den Abwassemachreinigungsbioreaktoren 21 zugeleitet, in denen es in Belüftungskammern 22 mit gelöstem Sauerstoff mit Hilfe des Wasserstrahlbelüfters 23 und den Umlaufpumpen 24 zusätzlich gesättigt wird. Die Pumpen 24 sind mit flexiblen Schläuchen ausgerüstet, die die Eintauchtiefe steuern. Danach läuft das Wasser durch die Futterschicht 27.

Das Bioreaktorfutter kann aus Kunststoff- oder Keramikplatten 52 mit angebrachten 10 - 100 mm langen Drehgelenken oder Platten 53 und Löchern 54 mit einem Durchmesser von 3 - 30 mm bestehen. Diese Löcher optimieren die hydrodynamische Arbeitsweise der Flüssigkeit im Bioreaktor an Biomassenanschwellungen (die den Futtervolumenanwendungsfaktor erhöhen). Die Futteroberfläche entwickelt eine spezifische Biozönose, die während ihrer Lebenszeit die Restkonzentrationen der organischen Stoffe und des Ammoniakstickstoffs verwendet. Die Rauheit (Greifzähne 55) begünstigt eine bessere Festlegung der festgelegten Mikroflora. Um die Bildung der festgelegten Biomasse auf der Futteroberfläche zu verstärken, wird das Futter mittels des Einschlusses von Metallzusammensetzungen in seinen Aufbau aktiviert. Die von den Vorrichtungen 5 zu den Bioreaktoren 21 geleitete Flüssigkeit enthält auch leichte Flocken und tote Schlempe. Wenn sich das Wasser durch das Futter 27 bewegt, werden die Flocken aufgrund der Flüssigkeitsfifterung mittels der Biozönose physikalisch aufgefangen, wobei dieses Auffangen durch kleinere Abstände zwischen den Drehgelenken oder Platten im oberen Abschnitt (3 - 5 mm) des Futters und durch die Bildung einer 1 - 1,5 mm starken Mikrofloraschicht in diesen begünstigt wird.

Die festgelegte, auf der Oberfläche des Futters gebildete Mikroflora absorbiert und oxidiert die restlichen organischen Verunreinigungen und überträgt ferner die stickstoffhaltigen Zusammensetzungen. Diese biologischen Prozesse laufen mit dem erforderlichen Luftsauerstoff mit Hilfe der Pumpe 24 und des Wasserstrahlbelüfters 23 ab. Wenn sich Schwebstoffe ansammeln, werden die Bioreaktoren teilweise geleert, und das Futter wird mit Hilfe der Spritzleitung 26 und der Pumpe 24 regeneriert. Dann wird die Pumpe in den Schacht des Bioreaktors eingetaucht und die Flüssigkeit durch die Rohrleitung 25 zur Mischkammer 4 der Vorrichtung 5 weggepumpt.

Die Rohrleitung 19 liefert die ganze Überschussschlempe an die Überschussschlempenaufbereitungsvorrichtung 20. Die Luft aus den Räumen der integrierten mechanischen Aufbereitungsvorrichtung 2, den Sandauffangvorrichtungen 3, den kombinierten biologischen Aufbereitungsvorrichtungen 5, den Bioreaktoren 21 und den Vorrichtungen 20 wird mittels des Lüfters 29 fortgenommen und der benutzten Luftbehandlungsvorrichtung 30 zugeführt.

Im Fall einer integrierten Aufbereitung von Haushalts- und Industrieabwasser mit einem Gehalt an organischen Verunreinigungen im BSD bis zu 1500 mg O₂/dm³, an Schwebstoffen bis zu 700 mg/dm³, Schwefelwasserstoff, Hydrosulfiden und Ammoniakstickstoff bis zu 100 mg/dm³ wird das Abwasser durch die Rohrleitung 1 zur integrierten mechanischen Aufbereitungsvorrichtung 2 und dann zur Sandauffangvorrichtung 3 geleitet. Vom Sammeltablett der Sandauffangvorrichtung 3 wird das Abwasser zur Mischkammer 4 geführt, in der es mit der umlaufenden Schlempenflüssigkeit der ersten kombinierten biologischen Aufbereitungsvorrichtungen 56 und mit einer 30 - 35%igen Wasserstoffperoxidlösung zusammengemischt wird, die durch die Rohrleitung 59 vom Mischvorrichtungstank 60 getrieben wird. Dann wird die Mischung aus Abwasser, Schlempe und Reagenzmittel mittels der Pumpe 18 zur Hauptrohrleitung 61 und zur Spritzleitung der Biogltervorrichtungen 56 gepumpt. Die Flüssigkeit läuft danach durch das Futter des Biofilters 46, wird zu den Belüftungssäulen abgeleitet und dann mit der aktiven Schlempe des Lufttanktrenners gemischt. Die Einführung eines Reagenzmittels in die Vorrichtung 56 oxidiert den Schwefelwasserstoff, und die Hydrosulfide verwandeln diesen in kolloiden Schwefel und Sulfate und vermindern die Sperrwirkung dieser Stoffe bei der Biozönose. Vor allem erhöht sich gemäß vorgenommener Untersuchungen die Konzentration des Sauerstoffs, der im Abwasser gelöst ist, bis auf 5 - 6 mg/dm³, wodurch die biologische Aufbereitung verstärkt wird. Die Einführung von Wasserstoffperoxid in die Mischkammer der ersten kombinierten biologischen Aufbereitungsvorrichtung ist ratsam, wenn die gestärkte Schwefelverbindungskonzentration 20 mg/dm³ überschreitet. Die Einführung von Wasserstoffperoxid wurde empirisch festgelegt, wobei die Anfangskonzentration der gestärkten Schwefelverbindungen berücksichtigt worden ist. Sie beträgt 10 -100 mg/dm³.

Im Fall einer velfachbewässerung und von Vielfachkontakten zwischen dem Abwasser und der Biozönose der Biofilterfutteroberfläche sowie der aktiven Schlempe der Reaktionszone des Lufttanktrenners (1 - 3 Stunden) wird der Schwefelwasserstoff einer Entgasung unterzogen. Die gestärkten Schwefelverbindungen werden durch Reaktion biochemisch oxidiert, die organischen Verunreinigungen auf 50 - 70 % im BSD biologisch abgebaut, und es tritt eine partielle Denitrifizierung (10 - 15 %) ein. Die Bildung einer spezifischen Mikroflora (Schwefelbakterien, fadenförmige Thionyl-Mikroorganismen, Anammox-Bakterien), die Hydrosulfide absorbiert und oxidiert, und die Ausführung der partiellen Denitrifizierung in den Biofiltervorrichtungen 56 werden durch die Kugelelemente 46 mit acht Hohlräumen 47 begünstigt, deren Achsen sich im Mittelpunkt der Kugel treffen. Die Festlegung und Entwicklung der Mikroflora wird durch die Rauheit der Oberfläche (0,1 - 1,5 mm) der Futterelemente, durch die Turbulenzverminderung und durch den zeitlich längeren Kontakt zwischen der wegfließenden Flüssigkeit und der Biomasse der Futterbehälter begünstigt. Ratsam ist ebenfalls, Elemente mit 4 - 10 Hohlräumen zu verwenden. Langzeit-Industrieuntersuchungen haben gezeigt, dass der optimale Durchmesser der Kugelelemente 70 mm beträgt, weil sich in diesem Fall das Futter nicht verschlammt. Wenn das Abwasser mit dem Inhalt an organischen Verunreinigungen im BSD von weniger als 100 mg/dm³ gereinigt ist, können gleichzeitig Futterelemente mit einem Minimaldurchmesser von 35 - 100 mm verwendet werden, und zwar auch dann, wenn die BSD-Konzentrationen 300 mg/dm³ überschreiten, Bei der Herstellung der Elemente für die elektrostatische Adhäsion und die katalytische Wirkung auf die Mikroflora ist es ratsam, Tone mit einem hohen Eisen- und Aluminiumgehalt zu verwenden. Das Material des Keramikfutters kann zusätzlich hochschmelzende Metallverbindungen enthalten.

Das Pumpen eines Teils der Umlaufflüssigkeit in die Eingangskammer 4 der ersten Vorrichtung 56 von der Hauptrohrleitung 63 der zweiten Vorrichtung 58 vermindert die Belastung der Biozönose der ersten Vorrichtung 56 mit organischen Stoffen (daher wird eine Überbelastung der Mikroflora verhindert). Die Überschussbiomasse, die bedeutende Mengen von absorbierten, nicht oxidierten, organischen Stoffen der Vorrichtung 56 enthält, wird in der Vorrichtung 58 mineralisiert. Zu diesem Zweck wird die eingeführte Schlempe durch die Rohrleitung 61 zur Mischkammer 57 der Vorrichtung 58 gepumpt.

Danach wird die Reinflüssigkeit der Absetzzonenvorrichtung 56 zur Mischkammer 57 der Vorrichtung 58 bewegt. Zum gleichen Platz wird ein Teil des Anfangsabwassers über die Rohrleitung 1 gefördert, und die Wasserstoffperoxidlösung des Behälters 60 wird über die Rohrleitung 59 getrieben. Die Einführung des Wasserstoffperoxids in die Mischkammer 57 der zweiten Vorrichtung 58 ist in dem Fall ratsam, wenn die restliche gestärkte Schwefelverbindung nach der ersten kombinierten Vorrichtung 5 mg/dm³ überschreitet. Dann wird die Mischung aus Abwasser, Schlempe und Reagenzmittel durch die Hauptrohrleitung 63 mit Hilfe der Umlaufpumpe 18 zur Spritzleitung der Biofiltervorrichtung 58 gepumpt, in der der Restteil der organischen Verunreinigungen weiter absorbiert und oxidiert wird. In dieser Phase und in demjenigen Fall, in dem die Belastung der Schlempe mit organischen Stoffen niedrig ist (0,05 - 0,2 kg BSD/kg aschefreier Substanz) treten eine vollständige Oxidierung der organischen Verunreinigungen und eine erhebliche Nitrifizierung und Teildenitrifizierung der stickstoffhaltigen Verbindungen auf. Die Aufenthaltszeit des Abwassers beträgt 4 - 7 Stunden. Um die biologische Aufbereitung im Fall der Überbelastung der Mikroflora in der Vorrichtung 56 zu aktivieren, werden 10 - 30 % der umlaufenden Flüssigkeit von der Hauptrohrleitung 63 der zweiten kombinierten biologischen Aufbereitungsvorrichtung 58 zur Mischkammer 4 der Vorrichtung 56 gepumpt. Wenn der Gehalt an Ammoniakstickstoff im Anfangsabwasser 30 mg/dm³ überschreitet, ist das Substrat der Denitrifiziervorrichtung 66 ein Teil der Schlempenmischung der Vorrichtung 58, wobei diese Mischung durch die Hauptrohrleitung 63 zur Mischvorrichtung 62 gepumpt wird. Die Schlempenflüssigkeit wird auch teilweise von der Rohrleitung 63 zur Überschussschlempenaufbereitungsvorrichtung 20 gepumpt.

Das Biofilterfutter der Vorrichtungen 56, 58 kann aus Kugelelementen 46 und/oder gewellten Keramiktafeln 42 hergestellt werden.

Um die Mikroflora, die die Hydrosulfide oxidiert und die Nitrifizierung durchführt, sollten die biologischen Futterblöcke 49 in den Behältern der aeroben Absetztankzonen der Vorrichtung 56 und/oder Vorrichtung 58 installiert werden.

Danach gelangt das gereinigte Abwasser der Absetzzone der Vorrichtung 58 zur Mischvorrichtung 62, in die auch mittels der Umlaufpumpe 18 die Schtempenflüssigkeit (Substrat) der Mischkammer 4 der ersten Vorrichtung 56 oder das Substrat der Mischkammer 57 der zweiten Vorrichtung 58 getrieben werden. Die Mischvorrichtung 62 kann 2 - 5 % der Gerinnungslösung für die Reagenzienentfemung der Phosphate aufnehmen. Die sich ergebende Mischung wird durch die Rohrleitung zur Nitrifiziervorrichtung mit der mechanischen Mischvorrichtung 66 befördert. Wenn sich diese Mischung in der Denitrifiziervorrichtung befindet, wird der Nitratstickstoff in flüchtige Stickstoffformen umgebildet. Lösliche Phosphate reagieren mit einem Gerinnungshydrolyseprodukt, wodurch sich die Bildung einer Koagulatausfällung zusammen mit aktiver Schlempe im unteren Abschnitt der Denitrifiziervorrichtung 66 ergibt. Dadurch vermindert das Abwasser nach dem Durchlauf durch die Denitrifiziervorrichtung seine Nitrit- und Phosphat-Stickstoffkonzentrationen. Eine experimentelle Untersuchung hat gezeigt, dass das wirkungsvollste Gerinnungsmittel ein aluminiumhaltiges Koagulat ist, das durch aktivierten Kohlenstoff modifiziert ist. Der Koagulatanteil in Al₂O₃ hinsichtlich der Menge, die für die Absorption der aktiven Schlempe der Koagulathydrolyseprodukte bestimmt ist, beträgt 20 - 60 mg/dm³.

Die Koagulateinführung verstärkt ferner die Entwässerung in der Überschussschlempenaufbereitungsvorrichtung 20.

Danach wird das Abwasser durch das Sammeltablett der Denitrifiziervorrichtung 66 mittels der Rohrleitung zur Belüftungskammer 22 des Bioreaktors 21 geleitet, der mit einem Wasserstrahlbelüfter 23 ausgerüstet ist, mit dem der flüchtige Stickstoff weggeblasen und die Flüssigkeit mit Luftsauerstoff gesättigt wird. Wenn sich dann die Flüssigkeit vom Boden nach oben bewegt, gerät sie in Kontakt mit dem künstlichen Futter 27.

Wenn die Reinigungsqualität im BSD erhöht werden soll und die Werte der Schwebstoffe auf bis zu 3 mg/dm³, des Phosphors auf bis zu 0,2 mg/dm³ und des Ammoniakstickstoffs auf bis zu 0,4 mg/dm³ gebracht werden sollen, wird dem Aufbereitungsflussschema ein Absorptionsfitter zugefügt. Das Abwasser wird dem Nachreinigungsfilter 67 zugeführt, der mit einem Zweischichtfutter ausgerüstet ist. Beim Kontakt mit der ersten Schicht wird das biologisch gereinigte Abwasser von feinen Partikeln, wie Schlempenflocken und Hydrokomplexen von Aluminiumphosphaten befreit, während beim Kontakt mit der zweiten Schicht die gelösten Orthophosphate entfernt werden. Dabei ergibt sich diese Entfernung aus der chemischen Absorption, die aufgrund der intermolekularen Reaktion zwischen den Orthophosphaten und der Oberfläche der Futterkörner stattfindet. Die Futtermaterialien des Bioreaktors 21 und des Filters 67 werden regelmäßig mittels der Pumpen 18 regeneriert.

Die Schlempe und die Absetzungen des Bioreaktors 21 und des Filters 67 werden durch die Hauptrohrleitung der Überschussschlempenaufbereitungsvorrichtung 20 oder in die Mischkammer der Vorrichtungen 56 und 58 weggetrieben.

Im Fall der Aufbereitung von Industrieabwasser mit einem Gehalt an organischen Verunreinigungen im BSD von 1500 - 3000 mg O₂/dm³, Schwebstoffen bis zu 1500 mg/dm³ (der Aschegehalt überschreitet 30 %) und Fetten bis zu 300 mg/dm³ wird das Abwasser zunächst in den Vorrichtungen 2, 3 mechanisch gereinigt und dann mittels der Pumpstation 68 zur Biokoagulator-Flotator-Vorrichtung 69 gefördert.

Die Empfehlung des Einschlusses der Biokoagulatoren in das Aufbereitungsflussschema wird durch Folgendes bestimmt: die Ausfällung (50 - 70 %) der Schwebstoffe, die partielle Entfernung der organischen Verunreinigungen (15 - 20 %) aufgrund der Absorptionseigenschaften der entfernten Oberschussschlempe, die Flockenbildung und Flotation, die Dichte der Überschussbiomasse und der Verunreinigungen (7 - 15 g/dm³), bevor diese zum mechanischen Dehydrierungsabschnitt gefördert werden, die partiellen organischen Belastungen und durch den durchschnittlichen pH-Wert.

Die Eingangskammer des Wasserstrahlbelüfters der Biokoagulator-Flotator-Vorrichtung 69 erhält auch über die Rohrleitung 63 die aktive Schlempe der Mischkammer 57. Die Einspeisekammer weist 0,3 - 1,5 m lange Belüftungssäulen auf, die an dieser Einspeisekammer befestigt sind, wobei der Neigungswinkel dieser Belüftungssäulen zum Drehzapfen 0 - 50° beträgt und diese Belüftungssäulen mit tangentialen Passstücken ausgerüstet sind. Der Flüssigkeitsfluss durch die Belüftungssäulen bringt einen Luftwert von q_{b} ≈ 0,8 m³/m³ Flüssigkeit (mit einer einzelnen Säule). Die Abwasser- und Schlempenmischung wird mit Hilfe der mit den tangentialen Passstücken ausgerüsteten Säulen in der Biokoagulator-Flotator- Vorrichtung 69 zum Rotieren gebracht. Der Schlempen-Wasser-Kontakt dauert in der Flockenkammer 8 - 20 Minuten. Diejenigen Fettpartikel, die mit den Luftblasen gefördert werden, werden durch die wellenförmige Bewegung der Flüssigkeit zum Sammeltablett ausgeschieden. Die Wirksamkeit der Fettabscheidung in der Biokoagulator-Flotator-Vorrichtung beträgt 60 - 80 %. Die Schlempenmischung wird nach der Flockenkammer durch den Verbreiterungskonus der Absetzzone bewegt, in der die Schlempenmischung geteilt wird. Danach wird die abgesetzte Abwasserflüssigkeit zu den Mischkammern der kombinierten biologischen Aufbereitungsvorrichtungen 56 und 58 gefördert, in denen die Restfette (60 - 100 mg/dm³) und die gelösten organischen Stoffe absorbiert und oxidiert werden.

Im Fall der Aufbereitung von Industrieabwasser mit einem Gehalt an organischen Verunreinigungen im BSD von 3000 - 50000 mg O₂/dm³ und an Schwebstoffen bis zu 1500 mg/dm³ wird das Abwasser nach seiner mechanischen Aufbereitung durch die Rohrleitung zur Biokoagulator-Flotator-Vorrichtung 69 und/oder direkt zum unteren Abschnitt des anaeroben Bioreaktors 70 gefördert.

Die zur Vorrichtung 70 durch Rohrleitungen geförderte Flüssigkeit wird gleichmäßig um den Umfang verteilt, wobei die Abstände vom konischen Teil des Bodens 100 - 200 mm betragen und wobei eine gleichmäßige Verteilung der Aufwärtsflüsse im Bioreaktor 70 und ein Waschen der sich absetzenden anaeroben Schlempe vorgesehen werden. Die Kontakte des eingehenden Abwassers mit der Schlempenmischung (die Biomassenkonzentration beträgt ≈ 10 - 20 g/dm³) in einer Gegenflussbetriebsart dauern 1 - 8 Stunden. Die Abwasser- und Schlempenmischung wird mit Hilfe derjenigen Pumpe umgerührt, die die abgesetzte Schlempe vom unteren Abschnitt des anaeroben Bioreaktors aufnimmt. Diese Pumpe fördert die Schlempe durch die Rohrleitung zum oberen Abschnitt des Reaktors. Die Schlempe wird eingeführt, und ihr Inhalt wird mit Hilfe eines Verteilsystems umgerührt, das aus mehreren 0,3 - 2,5 m langen Rohrleitungen besteht, deren Neigungswinkel zum Drehzapfen 0 - 70° beträgt. Dabei sind diese Rohrleitungen mit tangentialen Kurvenstücken ausgerüstet, die die Schlempenmischung im Reaktor in Umlauf bringen.

Die anaerobe Schlempe absorbiert und oxidiert 50 - 70 % der organischen Verunreinigungen und 60 - 80 % der Schwebstoffe. Eine Methanfermentation erhöht die Konzentration des Schwefelwasserstoffs und der Hydrosulfide bis zu 100 mg/dm³ und vermindert den pH-Wert der Umgebung auf 4 - 5.

Danach wird die vom anaeroben Bioreaktor geförderte Flüssigkeit durch die Rohrleitung zur Mischkammer der kombinierten biologischen Aufbereitungsvorrichtungen 56, 58 gelenkt. Dann wird die Abwasser- und Schlempenmischung durch die Hauptrohrleitung mittels der Umlaufpumpe 18, die in der Mischkammer der ersten kombinierten Vorrichtung 56 befestigt ist, zur Spritzleitung der Vorrichtungen 56 und auch zur Mischkammer der zweiten kombinierten Vorrichtung 58 gefördert. Durch die Hauptrohrleitung der Umlaufpumpe 18, die in der Mischkammer 57 der zweiten kombinierten Vorrichtungen 58 befestigt ist, wird die Schlempenmischung zur Spritzleitung der Vorrichtung 58, zur Mischkammer 4 und zur Überschussschlempenaufbereitungsvorrichtung 20 gefördert. An dieselben Stellen wird die verdichtete Ausfällung des konischen Teils des Biokoagulators 69 und/oder des anaeroben Bioreaktors 70 gefördert.

Die Ausbildungsmerkmale der kombinierten biologischen Aufbereitungsvorrichtungen, das zweistufige Schema mit aufeinanderfolgend verbundenen, kombinierten biologischen Aufbereitungsvorrichtungen und die Anwendung von Wasserstoffperoxid sorgen für eine vollständige Entfernung des Schwefelwasserstoffs und der Hydrosulfide.

Eine negative Wirkung der pH-Werte auf die aerobe Reinigung wird nacheinander vermindert aufgrund der wiederholten Verdünnung der Abwasserflüssigkeit mit der umlaufenden aktiven Schlempe in den Mischkammern und der Schlempenmischung, die zuerst mit der Biozönose der Biofilter in Kontakt gerät, die an niedrige pH-Werte angepasst sind.

Abhängig vom angenommenen Aufbereitungsflussschema weist die Vorrichtung 20 Überschussschlempenrohrleitungen auf, die von den kombinierten biologischen Aufbereitungsvorrichtungen 5, 58, vom anaeroben Bioreaktor 70 und von der Denitrifiziervorrichtung 66 zu dieser Vorrichtung 20 verlaufen. Es gibt auch eine Möglichkeit zur Verbindung des Biokoagulators 69 mit der Vorrichtung 20. Die Rohrleitungen sind mit der Eindickvorrichtung 71 der Vorrichtungen 20 verbunden. Soll die Wirkung der Schlempe und der Absetzungseindickung erhöht werden, wird an die Eindickvorrichtung eine Abgabeleitung 72 für die Abgabe von Gerinnungs- und Flockungsmitteln angeschlossen. Dann wird die eingedickte Ausfällung zur Bandfilterpresse 73 gefördert, in der ein Kuchen mit einer vorbestimmten Feuchtigkeit von 75 - 80 % gebildet wird. Der entwässerte Kuchen gelangt zur Körnungsvorrichtung 74, an die eine Abgabeleitung für organische und/oder mineralische Additive 75 angeschlossen ist. Die organischen und mineralischen Additive können durch Düngemittel, wie Sägemehl, Sonnenblumensamenhülsen und Mineralien gebildet sein. Die Körner gelangen von der Vorrichtung 74 zu den Transportrollen 76, in die elektrische Heizelemente 77 eingebaut sind. Diese Heizelemente 77 können auch unter dem Rollentransporter angeordnet sein und heizen die Körner. Die rotierenden Rollen weisen Greifzähne auf, die die Körner bewegen. Mikrowellenstrahler 78 sind über dem Transporter befestigt und trocknen und "dehelmintisieren" den Körnerinhalt. Danach werden die Körner in den Sammeltank 79 gefüllt.

Die Luft von den mechanischen biologischen Aufbereitungs- und Nachaufbereitungsvorrichtungen wird mittels des Lüfters 29 zur Luftbehandlungsvorrichtung 30 gefördert. Sie strömt zuerst durch die Bewässerungskammer 80, in der sie in Berührung mit einer Natriumhypochloritlösung kommt, die in das Bewässerungssystem 81 mittels der Umlaufpumpe 82 eingespeist wird. Die Bewässerung und die Bewegung der Luft und die Tropfen der Natriumhypochloritlösung durch das künstliche Futter des Abschnitts 84 führen zu einem Zwischenphasenkontakt. Danach wird die durch die direkten Versorgungsrohrteitungen 84 geförderte Luft zum Blasenabschnitt 83 gefördert, in dem die Luftblasen immer wieder mit der Lösung in Berührung kommen. Durch Rohrleitungen 86 kleineren Durchmessers im unteren Abschnitt der Rohrleitungen 86 wird die Ausgangsluft in kleine Blasen zerteilt, wodurch ein besserer Oberflächenkontakt zwischen den Phasen begünstigt wird. Die aufsteigende Luft in der Luftleitung 92 gelangt zum Tropfentrenner 93. Wenn die Flüssigkeit durch das Sammeltablett 85 zum Ableitungskollektor 89 und danach zu den Wasserstrahl-Luft-Spritzrohrleitungen 88 strömt, wird ein Teil der zur Vorrichtung 30 (0,5 - 0,7 m³/m³ der Flüssigkeit) gelangenden Luft in die Rohrleitungen eingesaugt. Ein weiteres Auftreten von Luftblasen rührt die Inhalte des luftgeeigneten Abschnitts 83 um und erneuert verstärkt die Gas-Flüssigkeits-Kontaktoberfläche der ganzen Inhalte. Eine neue Lösung wird vom Hypochlorittank 90 eingespritzt. In Notfällen kann ein Odorisierungsmittel vom Tank 91 geliefert werden. Die Luft gelangt nach ihrer Nassreinigung in der Luftleitung 92 zur Tropfentrennvorrichtung 93. Danach wird die Luft zur Nachbehandlung zu Ultraviolettdesinfektionsvorrichtungen 95 gefördert.

Ein Fehler bei der biochemischen Aufbereitung des Abwassers kann bei einem Zusammenbruch des ganzen Prozesses auftreten, und demzufolge können unzulässige Geruchsbelästigungen auftreten. Deshalb sollte das Luftbehandlungsschema beim Hilfsbetrieb der Aufbereitungsanlage aktivierte Kohlenstofffilter 94 aufweisen, die zusammen mit Odorisierungsmitteln alle unzulässigen Gerüche vollkommen ausschließen. Das Ausspritzen eines kleinen Teils der kleinen Hypochlorittropfen von der Tropfentrennvorrichtung 93 verhindert die Bildung von Mikroflora in den Poren des aktivierten Futters. Eine Erhitzung (Futterregenerierung) findet gewöhnlich in der Nachfehlerperiode statt. Nachdem die Luft durch die Kohlenstofffilter geströmt ist, wird sie zu Ultraviolettdesinfektionsvorrichtungen 95 gefördert.

### Industrielle Anwendung

Anzuraten ist die Anwendung der integrierten biochemischen Abwasseraufbereitungsanlage für die Reinigung von Haushalts- und Industrieabwasser, das durch Wohnorthäuser, Dörfer, Städte und Geschäftsviertel, Fleischabpackanlagen, Fischverarbeitungsanlagen, Konservenfabriken, Viehzuchtfarmen, Hefefabriken, Brauereien, Zuckermühlen, Pulp- und Papiermühlen, chemische und mikrobiologische Unternehmen usw. erzeugt wird.

Der Reinigungsgrad des Haushalts- und Industrieabwassers mit BSD von 100 -1500 mg/dm³ und mit Schwebstoffen bis zu 700 mg/dm³ beträgt 98 - 99 %. Wenn das Abwasser im BSD nur 50 - 100 mg/dm³ beträgt, führen die Biofilter der Anlage eine Absorption und Oxidation von 70 - 80 % der organischen Verunreinigungen durch. Die vom Biofilterfutter getrennte Biomasse vervollständigt die Schlempenschwebstoffschicht in der Lufttanktrennvorrichtung, die den Reinigungswirkungsgrad auf bis zu 99 % bringt.

Wie durch Halbindustrie- und Industrietests gezeigt worden ist, sieht die angemeldete integrierte biochemische Aufbereitungsanlage eine vollständige Entfernung von Schwefelwasserstoff und Hydrosuldiden, eine Verminderung der Ammoniakstickstoffkonzentration von 100 mg/dm³ bis hinunter zu 0,2 mg/dm³ und einer Phosphorkonzentration bis hinunter zu 0,2 mg/dm³ vor.

Der Einschluss von Biokoagulator-Flotator-Vorrichtungen im Flussschema mit einer biologisches Zweistufenaufbereitung mit kombinierten Vorrichtungen bringt die Parameter des konzentrierten Abwassers (BSD-Gehalt bis zu 3000 mg/dm³, Fette bis zu 300 mg/dm³ und Schwebstoffe bis zu 1500 mg/dm³) auf Werte, die 10 - 15 mg/dm³ entsprechen.

Der Einschluss von anaeroben Bioreaktoren in das Flussschema der integrierten biochemischen Abwasseraufbereitungsanlage sorgt für eine wirksame, starke Abwasserreinigung (BSD-Gehalt bis zu 50000 mg/dm³).

Die Anlage gemäß der Erfindung löst ein komplexes Problem der Abwasseraufbereitung, der verwendeten Luftbehandlung und der Herstellung von wertvollen Körnerdüngemitteln,

Im Vergleich zu den bekannten Belüftungsanlagen ist der für die biochemische Auf bereitung nötige Energieverbrauch 2 - 3 mal geringer; das Personal vermindert sich um 50 - 70 %; die Fläche der Aufbereitungsanlagen ist ebenfalls dreimal geringer, und die sanitäre Hygienezone kann abhängig von der Anlagenkapazität 50 - 100 m betragen.

## Patentansprüche

1. Integrierte biochemische Abwasseraufbereitungsanlage mit mechanischen Auf bereitungsvorrichtungen, einer Abwasser- und Schlempenmischkammer mit einer Umlaufpumpe und einer kombinierten biologischen Aufbereitungsvorrichtung, die ein Biofilter mit einem ebenen Futter, einer Spritzleitung, Sammeltabletts und Ableitungskollektoren aufweist, die an Wasserstrahl-Belüftungssäulen angeschlossen sind, die in Belüftungszonen eingetaucht sind, und mit Nachaufbereitungsvorrichtungen,
**dadurch gekennzeichnet,**
**dass** in der kombinierten biologischen Aufbereitungsvorrichtung mit einer Kapazität von 5 - 15000 m³/Tag die Spritzleitung des Biofilters Tabletts mit Entleerungspassstücken und Reflexionsscheiben aufweist,
**dass** der Abstand von den oberen Enden der Entleerungspassstücke der Tabletts von den Reflexionsscheiben 0,8 - 2 m beträgt,
**dass** der Abstand zwischen den Mittelpunkten der Tabletts und der Abstand zwischen den Achsen der Tablettpassstücke 0,6 - 1,8 m beträgt,
**dass** der Durchmesser der Belüftungssäulen 25 - 100 mm beträgt,
**dass** die Höhe der Belüftungssäulen über dem Bewässerungspegel in Belüftungsabsetztanks 1,2 - 3,5 m beträgt,
**dass** die Eintauchtiefe unter dem Flüssigkeitspegel 1,5 - 4 m beträgt,
**dass** der Abstand zwischen den oberen Belüftungssäulenschnitten 50 - 500 mm beträgt und
**dass** der Abstand zwischen den unteren Belüftungssäulenschnitten 0,5 - 3 m beträgt.

2. Anlage nach Anspruch 1,
**dadurch gekennzeichnet,**
**dass** die Länge der an den Spritzleitungstabletts installierten Entleerungspassstücke 2 - 6 Durchmesser, der Durchmesser der Reflexionsscheiben 80 - 200 mm beträgt,
**dass** die Rohrleitungen, die die Abwasser- und Schlempenmischung zu den Bewässerungstabletts des Biofilters fördern, Verschlüsse aufweisen und dass zusätzlich an den Eingängen der Tabletts Tore angeordnet sind, während vor den Anfangsentleerungspassstücken Leitplatten angeordnet sind.

3. Anlage nach Anspruch 1,
**dadurch gekennzeichnet,**
**dass** die Tabletts der Biofilterspritzieftungen mit Helium-Neon-Laser ausgerüstet sind, die das Wachstum der Mikroflora, die Nitrifizierung und die Denitrifizierung stimulieren.

4. Anlage nach Anspruch 1,
**dadurch gekennzeichnet,**
**dass** die Futterelemente der Biofilter als Kugeln mit einem Durchmesser von 35 - 100 mm und mit 4 - 10 Hohlräumen ausgebildet sind, deren Achsen sich im Mittelpunkt der Kugel treffen,
**dass** die Kugeln auf ihrer Oberfläche Greifzähne mit einer Länge von 0,1 - 1,5 mm aufweisen und
**dass** das Material der Futterelemente Metallkombinationen aufweist.

5. Anlage nach Anspruch 1,
**dadurch gekennzeichnet,**
**dass** das Biofilterfutter aus gewellten Keramiktafeln mit einer Breite von 0,5 - 1,5 m, einer Höhe von 0,5 - 3 m, einer Stärke von 2 - 4 mm, mit Greifzähnen (Rauheit), einem Rahmen aus parallelen und längslaufenden Wellenbändern mit einer Breite und Stärke von 3 - 10 mm hergestellt ist,
**dass** ein Teil der längslaufenden Bänder als durchdringende wellenförmige Teilungsstücke mit einer Breite von 3 - 10 mm ausgebildet sind und
**dass** das Material der Keramiktafeln Metallkombinationen aufweist.

6. Anlage nach Anspruch 1,
**dadurch gekennzeichnet,**
**dass** der Ableitungskollektor des Biofiltertabletts mit einem Lenkreflektor ausgerüstet ist,
**dass** der obere Abschnitt der Belüftungssäulen Passstücke aufweist, die in Sockel eingedreht sind, die am Boden des Ableitungskollektors befestigt sind, und dass der Ableitungskollektor mit einem kleinen Zugang versehen ist, der für die Montage der Passstücke und für die Reinigung der Rohrleitungen vorgesehen ist.

7. Anlage nach Anspruch 1,
**dadurch gekennzeichnet,**
**dass** die Ableitungspassstücke der Biofilterspritzleitungen und die Passstücke der oberen Abschnitte der Belüftungssäulen auf dem Umfang von 1 - 1,5 Umdrehungen helixförmige Vertiefungen mit einer Höhe von nicht mehr als 0,7 Passstückdurchmessem aufweisen.

8. Anlage nach Anspruch 1,
**dadurch gekennzeichnet,**
**dass** der Außenumfang des Trennstücks, das den Biofilterraum vom Raum des Lufttanktrenners mit einem Abstand von 0,5 - 1,5 m voneinander abtrennt, Öffnungen oder Bypassventile aufweist.

9. Anlage nach Anspruch 1,
**dadurch gekennzeichnet,**
**dass** für Durchmesser der Belüftungssäulen von 25 - 100 mm die Höhe der unteren Säulenschnitte über dem Boden der Belüftungszone 0,05 - 0,4 m beträgt, während der Abstand vom unteren Abschnitt der äußersten Belüftungssäulen zur Kopplungsstelle zwischen dem flachen Teil und dem konischen Teil des Bodens des Lufttanktrenners 0,5 - 1,2 m beträgt.

10. Anlage nach Anspruch 1,
**dadurch gekennzeichnet,**
**dass** die Länge des unteren Beins des konischen Teils des Lufttanktrenners die Hälfte der Breite der Absetzzone plus 0,1 - 1,0 m, die Höhe des unteren Abschnitts des konischen Teils des Trennstücks, der die Belüftungszone von der Absetzzone nach unten zum Boden trennt, 0,5 - 1,5 m und die Breite von dreieckförmigen Rollen, die auf dem flachen Abschnitt des Bodens der Belüftungszone angeordnet sind, 0,5 - 2,0 m beträgt, während die Höhe dieser Rollen 0, 5-1,5 m ist,
**dass** die Schlempenableitungsrohrleitung längs des Außenumfangs des konischen Teils des Bodens des Lufttanktrenners befestigt ist und Öffnungen oder Passstücke aufweist, die unter einem Winkel von 0 - 90° zur Längsachse der Rohrleitung und mit einem Abstand von 0,2 - 1,0 m voneinander angeordnet sind.

11. Anlage nach Anspruch 1,
**dadurch gekennzeichnet,**
**dass** über den Rollen biologische Futterblöcke angeordnet sind, die aus Kunststoffplatten mit Vertiefungen von 3 - 30 mm und mit 5 - 50 mm langen Borsten oder aus Metallverbindungen aufweisenden Keramikplatten bestehen, die mit festgelegten Drehgelenken oder Platten verschiedener Längen (5 - 40 mm) und Greifzähnen (0,1 - 1,5 mm) versehen sind, die zur Schaffung einer Rauheit dienen.

12. Anlage nach Anspruch 1,
**dadurch gekennzeichnet,**
**dass** sie aus 2 - 4 kombinierten biologischen Aufbereitungsvorrichtungen besteht, die mit einer zugehörigen Mischkammer mittels Rohrleitungen verbunden sind, die die Schlempe aus den Belüftungsabsetztanks wegschaffen, und
**dass** die Hauptrohrleitung der Umlaufpumpe der Mischkammer mit den Spritzleitungen der Biofilter der kombinierten biologischen Aufbereitungsanlage verbunden ist.

13. Anlage zur integrierten biochemischen Aufbereitung von Abwasser mit organischen Verunreinigungen im BSD von bis zu 3000 mg/dm³ und Fetten bis zu 300 mg/dm³ und mit Biokoagulator-Flotator-Vorrichtungen und kombinierten biologischen Aufbereitungsvorrichtungen,
**dadurch gekennzeichnet,**
**dass** die Umlaufpumpe der Hauptrohrleitung in der Mischkammer der zweiten kombinierten Vorrichtung befestigt und mit der Spritzleitung derselben Vorrichtung, mit der Mischkammer der ersten kombinierten Vorrichtung und mit einem Wasserstrahlbelüfter der Biokoagulator-Flotator-Vorrichtung oder mit einer Überschussschlempenaufbereitungsvorrichtung verbunden ist und
**dass** die Futterkammer des Belüfters 0,3 - 1,5 m lange Belüftungssäulen, deren Neigungswinkel zum Drehzapfen 0 - 50° betragen, und tangentiale Passstücke aufweist.

14. Anlage zur integrierten biochemischen Aufbereitung von Abwasser mit einem Gehalt an organischen Verunreinigungen im BSD von bis zu 50000 mg/dm³, an Schwefelwasserstoff, Hydrosulfiden und Ammoniakstickstoff bis zu 100 mg/dm³ und mit mechanischen Aufbereitungsvorrichtungen (für eine Verunreinigungskonzentration im BSD von bis zu 3000 mg/dm³) und im BSD von bis zu 50000 mg/dm³ mit anaeroben Bioreaktoren, einer Abwasser- und Schlempenmischkammer mit Umlaufpumpen und kombinierten biologischen Aufbereitungsvorrichtungen,
**dadurch gekennzeichnet,**
**dass** die das Abwasser fördernde Rohrleitung mit den Mischkammern der kombinierten biologischen Aufbereitungsvorrichtungen verbunden ist,
**dass** die Hauptrohrleitung der Umlaufpumpe, die in der Mischkammer der ersten kombinierten Vorrichtungen befestigt ist, gleichzeitig mit der Spritzleitung und auch mit der Mischkammer der zweiten kombinierten Vorrichtung verbunden ist und
**dass** die Umlaufpumpe der Hauptrohrleitung, die in der Mischkammer der zweiten kombinierten Vorrichtung befestigt ist, mit der Spritzleitung dieser Vorrichtung, mit der Mischkammer der ersten kombinierten Vorrichtung und mit der Überschussschlempenaufbereitungsvorrichtung verbunden ist.

15. Anlage nach Anspruch 14,
**dadurch gekennzeichnet,**
**dass** die die umlaufende Flüssigkeit verteilenden Rohrleitungen im anaeroben Bioreaktor 0,3 - 2,5 m tief eingetaucht sind, einen Neigungswinkel zum Drehgelenk von 0 -70° aufweisen und mit tangentialen Passstücken ausgerüstet sind.

16. Anlage nach Anspruch 14,
**dadurch gekennzeichnet,**
**dass** die Mischkammern der ersten und/oder zweiten kombinierten Anlage an diese Mischkammern angeschlossene Rohrleitungen aufweisen, die Wasserstoffperoxid fördern.

17. Integrierte biochemische Abwasseraufbereitungsanlage,
**dadurch gekennzeichnet,**
**dass** sie zusätzlich mit Denitrifiziervorrichtungen und/oder einem Nachaufbereitungsbloreaktor mit künstlichem Futter ausgerüstet ist,
**dass** eine Mischvorrichtung an die Rohrleitung angeschlossen ist, die geklärte Flüssigkeit von der ersten und/oder zweiten kombinierten Anlage an die Denitrifiziervorrichtungen verteilt, und
**dass** eine Hauptrohrleitung der Umlaufpumpen und der Rohrleitungen, die eine Gerinnungslösung zuführen, an diese Mischvorrichtung angeschlossen ist.

18. Anlage nach Anspruch 17,
**dadurch gekennzeichnet,**
**dass** das Bioreaktorfutter aus Kunststoff oder Keramiktafeln mit Drehgelenken oder 10 - 100 mm langen Platten hergestellt ist, die Vertiefungen von 3 - 30 mm aufweisen,
**dass** die Abstände zwischen den Drehgelenken oder Platten und die Durchmesser der Vertiefungen vom oberen Futterende zum Futterboden allmählich abnehmen,
**dass** Tafeln, Drehgelenke oder Platten Greifzähne mit einer Länge von 0,1 - 1,5 mm aufweisen und
**dass** der Futtermaterialaufbau Metallzusammensetzungen aufweist.

19. Integrierte biochemische Abwasseraufbereitungsanlage,
**dadurch gekennzeichnet,**
**dass** sie zusätzlich ein Absorptionsfilter mit einem Futter aufweist, das eine chemische Phosphatabsorption durchführen kann und das mit der kombinierten biologischen Aufbereitungsvorrichtung und/oder mit der Denitrifiziervorrichtung und/oder mit dem Bioreaktor verbunden ist.

20. Integrierte biochemische Abwasseraufbereitungsanlage,
**dadurch gekennzeichnet,**
**dass** sie zusätzlich eine Überschussschlempenaufbereitungsvorrichtung aufweist, deren Eindickvorrichtung mit Rohrleitungen versehen ist, die von den kombinierten biologischen Aufbereitungsvorrichtungen und/oder vom Biokoagulator und/oder vom anaeroben Bioreaktor kommen,
**dass** die Eindickvorrichtung wiederum mit einer Bandfilterpresse verbunden ist, deren den Dehydratkuchen fördernde Vorrichtung mit einer Körnungsvorrichtung verbunden ist, wobei auch eine Abgabeleitung (für organische und/oder mineralische Additive) angeschlossen ist,
**dass** eine die Körner fördernde Vorrichtung mit einem Rollenförderer verbunden ist, der mit elektrischen Heizelementen und/oder mit Mikrowellenstrahlern versehen ist, die aufeinanderfolgend über der Transportvorrichtung befestigt sind, die wiederum mit einem Speichertank verbunden ist.

21. Integrierte biochemische Abwasseraufbereitungsanlage,
**dadurch gekennzeichnet,**
**dass** Luftleitungen von den kombinierten biologischen Aufbereitungsvorrichtungen, den Überschussschlempenaufbereitungsvorrichtungen, Bioreaktoren, Räumen der integrierten mechanischen Aufbereitungsvorrichtungen und Sandauffangvorrichtungen aufeinanderfolgend mit einem Saugpassstück eines Hochdrucklüfters verbunden sind, dessen Hauptluftleitung wiederum mit einer Bewässerungskammer der Luftbehandlungsvorrichtung verbunden ist, dass die Vorrichtung mit einer Spritzleitung versehen ist, die mit derjenigen Umlaufpumpe verbunden ist, deren Saugpassstück an den luftgeeigneten Abschnitt der Vorrichtung angeschlossen ist,
**dass** ein Anklippsabschnitt der Vorrichtung über dem luftgeeigneten Abschnitt, der mit einem künstlichen Futter gefüllt ist, ein Sammeltablett mit direkten Lufteinspeiserohrleitungen (deren Länge 1,2 - 2,5 m beträgt und die 0,4 -0,7 m tief in die Flüssigkeit des luftgeeigneten Abschnitts eingetaucht sind sowie in ihrem unteren Abschnitt mit Rohrleitungen geringer Durchmesser gefüllt sind), und Wasserstrahiluftspritzrohrleitungen vorgesehen sind, die an einen Ableitungstank angeschlossen, 0,6 - 1,8 m über der Flüssigkeit angeordnet und 1 - 3 m tief in die Flüssigkeit eingetaucht sind, und
**dass** die Luftbehandlungsvorrichtung mit einem eine Natriumhypochloritlösung aufweisenden Tank verbunden ist, wobei ein Odorisierungsmitteltank und eine Luftleitung wiederum mit einer Wassertropfeneliminierungsvorrichtung verbunden sind, die aufeinanderfolgend an einen aktivierten Kohlenstofffilter und eine Ultraviolettdesinfektionseinheit angeschlossen ist.
